# EUROPEAN PATENT APPLICATION

(11) **EP 4 466 972 A1**
(43) Date of publication of application: **27.11.2024**
(21) Application number: 24175852.3
(22) Date of filing: 14.05.2024
(51) Int. Cl.: A01D 34/00

(54) **TOOL DEVICE AND STEERABLE-WHEEL ASSEMBLY**

(30) Priority: 18.05.2023 US 202363467468 P
(71) Applicant: Techtronic Cordless GP, Anderson, SC 29621 (US)
(72) Inventor: RAY, Thomas, Anderson, 29621 (US); OGIYENKO, Denis, Anderson, 29621 (US); GIVENS, Robert, Anderson, 29621 (US); FAROOQUI, Shehzaan, Anderson, 29621 (US); D'ANGELO, Adam, Anderson, 29621 (US); EDDY, Conner, Anderson, 29621 (US); LAMBERT, Matt, Anderson, 29621 (US); KONDRO, Grzegorz, Anderson, 29621 (US); LALIBERTÉ, Eric, Anderson, 29621 (US); FELDKAMP, Jonathan, Anderson, 29621 (US)
(74) Representative: Novagraaf Group

(57) **Abstract**

A tool device, such as a lawnmower, or a steerable-wheel assembly therefor may include a frame, a walking element, a drive motor, and a steerable-wheel assembly (SWA). The walking element may be coupled to the frame. The drive motor may selectively power the walking element. The SWA may be attached to the frame apart from the walking element. The SWA may include a caster connector pivotably mounted to the frame to rotate about a pivot axis, a steerable wheel rotatably coupled to the caster connector, a primary drive gear, a primary driven gear, and a secondary driven gear.

## Description

### PRIORITY STATEMENT

The present application claims the benefit of priority to U.S. Provisional Patent Application Serial No. 63/467,468, filed on May 18, 2023, the disclosure of which is incorporated by reference herein in its entirety.

### FIELD

The present subject matter relates generally to tool devices, such as lawnmowers, and more particularly to devices having one or more steerable-wheel assembly.

### BACKGROUND

Tool devices that include one or more wheel assemblies such as for steering the device are common for a variety of applications. For instance, lawnmowers are typically used to trim grass and maintain lawns. Especially for large areas, it is common to have a riding lawnmower on which a user sits or stands. At least one electric or gas-powered motor may drive one or more wheel assemblies to propel the lawnmower while one or more wheel assemblies are moved (e.g., actively or passively) to help steer the lawnmower. Such lawnmowers may be controlled by a variety of user inputs, such as a steering wheel, joystick, lap bar(s), etc.

In some lawnmowers or devices, it is possible to provide a steerable caster wheel assembly, separate from the driven wheel(s), that can be pivoted to influence the steering or direction of travel. One such device is a Zero-Turn-Radius (ZTR) lawnmower, which generally includes a pair of independently driven rear wheels. A pair of passive caster wheels are also typically included to support the front of the mower. The directional angle of the front wheels may change under the influence of one or both of the driving wheels and the ground terrain. In some cases, the front wheels of a ZTR lawnmower may be actively steered by mechanically coupling the front wheels to the mower drive control system.

### BRIEF DESCRIPTION

Although existing devices or lawnmowers may permit steering, they present some drawbacks. For instance, while existing machines may have one or more systems (e.g., linkages or motors) for setting the directional angle of one or more (e.g., front) steering wheels, it can be difficult to ensure that a desired directional angle matches the position of a steering input. This can become especially significant as time and use of a device affects the alignment of various assemblies. Additionally or alternatively, it can often be difficult or expensive to provide a system with enough strength, power, or available torque to quickly and reliably adjust the directional angle of the steering wheels. Moreover, existing systems may require linkages or motors that are generally exposed or otherwise susceptible to damage or interference during use.

As a result, further improvements to devices or vehicles (e.g., lawnmowers) and steering assemblies of the same are needed. As an example, devices with one or more features to ensure consistent, reliable, or accurate steering (e.g., as dictated by directional angle of a steerable-wheel assembly) would be useful. As an additional or alternative example, having a device with a relatively inexpensive or reliable steerable-wheel assembly (e.g., capable of quickly or easily adjusting the directional angle thereof) would be desirable. As another additional or alternative example, it would be advantageous to provide a device having a robust, durable, or resilient steerable-wheel assembly (e.g., within a relatively small mounting arrangement).

Aspects and advantages of the invention will be set forth in part in the following description, or may be obvious from the description, or may be learned through practice of the invention.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures.
FIG. 1 provides a perspective view of a lawnmower according to exemplary embodiments of the present disclosure.
FIG. 2 provides a top plan view of the exemplary lawnmower of FIG. 1.
FIG. 3 provides a perspective view of a steerable-wheel assembly according to exemplary embodiments of the present disclosure.
FIG. 4 provides a side section view of the exemplary wheel assembly of FIG. 3.
FIG. 5 provides a perspective view of a front steering assembly, including a pair of steerable-wheel assemblies, according to exemplary embodiments of the present disclosure.
FIG. 6 provides a perspective view of a right steerable-wheel assembly of the exemplary front steering assembly of FIG. 5.
FIG. 7 provides a side section view of the exemplary steerable-wheel assembly of FIG. 6.
FIG. 8A provides a top perspective view of an isolated portion of the exemplary steerable-wheel assembly of FIG. 6, including an assembly motor.
FIG. 8B provides a bottom perspective view of an isolated portion of the exemplary steerable-wheel assembly of FIG. 6, including an assembly motor.
FIG. 9 provides a side section view of the exemplary steerable-wheel assembly of FIG. 6.
FIG. 10 provides a bottom perspective view of a portion of the exemplary steerable-wheel assembly of FIG. 6.
FIG. 11 provides a top plan view of a portion of the exemplary steerable-wheel assembly of FIG. 6.
FIG. 12 provides a flow chart illustrating a method of operating a tool device according to exemplary embodiments of the present disclosure.
FIG. 13 provides a perspective view of a front steering assembly, including a pair of steerable-wheel assemblies, according to other exemplary embodiments of the present disclosure.
FIG. 14 provides a perspective view of a front steering assembly, including a pair of steerable-wheel assemblies, according to still other exemplary embodiments of the present disclosure.
FIG. 15 provides a simplified plan view of a magnet in a first position for a steerable wheel assembly.
FIG. 16 provides a simplified plan view of a magnet in a second position for a steerable wheel assembly.
FIG. 17 provides a perspective view of a steerable-wheel assembly according to exemplary embodiments of the present disclosure.
FIG. 18 provides a side section view of the exemplary wheel assembly of FIG. 17.
FIG. 19 provides a top perspective view of a portion of the exemplary wheel assembly of FIG. 17.
FIG. 20 provides a bottom perspective view of a portion of the exemplary wheel assembly of FIG. 17.
FIG. 21 provides a perspective view of caster connector, including an assembly bracket and pivot rod, of the exemplary wheel assembly of FIG. 17.
FIG. 22 provides a top plan view of the exemplary assembly bracket of FIG. 17.
FIG. 23 provides a cross-sectional perspective view of a portion of a steerable-wheel assembly, including a sensor assembly, according to exemplary embodiments of the present disclosure.
FIG. 24 provides a magnified perspective view of a portion the exemplary wheel assembly of FIG. 23.
FIG. 25 provides an exploded perspective view of a portion of a pivot rod and rod cap of the exemplary wheel assembly of FIG. 23.
FIG. 26 provides a top plan view of the exemplary rod cap of FIG. 25.
FIG. 27 provides a cross-sectional perspective view of a portion of a steerable-wheel assembly, including a sensor assembly, according to exemplary embodiments of the present disclosure.
FIG. 28 provides an exploded perspective view of a portion of a pivot rod and rod cap of the exemplary wheel assembly of FIG. 27.
FIG. 29 provides a cross-sectional perspective view of a portion of a steerable-wheel assembly according to exemplary embodiments of the present disclosure.
FIG. 30 provides a bottom perspective view of a guard cap assembly, in isolation, of the exemplary wheel assembly of FIG. 29.

Repeat use of reference characters in the present specification and drawings is intended to represent the same or analogous features or elements of the present invention.

### DETAILED DESCRIPTION

Reference now will be made in detail to embodiments of the present invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Except as explicitly indicated otherwise, recitation of a singular processing element (e.g., "a controller," "a processor," "a microprocessor," etc.) is understood to include more than one processing element. In other words, "a processing element" is generally understood as "one or more processing element." Furthermore, barring a specific statement to the contrary, any steps or functions recited as being performed by "the processing element" or "said processing element" are generally understood to be capable of being performed by "any one of the one or more processing elements." Thus, a first step or function performed by "the processing element" may be performed by "any one of the one or more processing elements," and a second step or function performed by "the processing element" may be performed by "any one of the one or more processing elements and not necessarily by the same one of the one or more processing elements by which the first step or function is performed." Moreover, it is understood that recitation of "the processing element" or "said processing element" performing a plurality of steps or functions does not require that at least one discrete processing element be capable of performing each one of the plurality of steps or functions.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, a tool device, such as a lawnmower or other suitable tool vehicle described herein may include one or more steerable-wheel assemblies. Such wheel assemblies may provide a motor that pivots or rotates a wheel (e.g., caster wheel) about a corresponding axis. During use, a steering input from the user may be used to pivot the steerable-wheel assembly to various directional angles that correspond to a relative position of the steering input. One or more gear sub-assemblies or systems may transfer motion from the motor to the wheel to set the directional angle. The directional angle or position of the wheel may be detected and adjusted to maintain an intended position (e.g., corresponding to the relative position of the steering input).

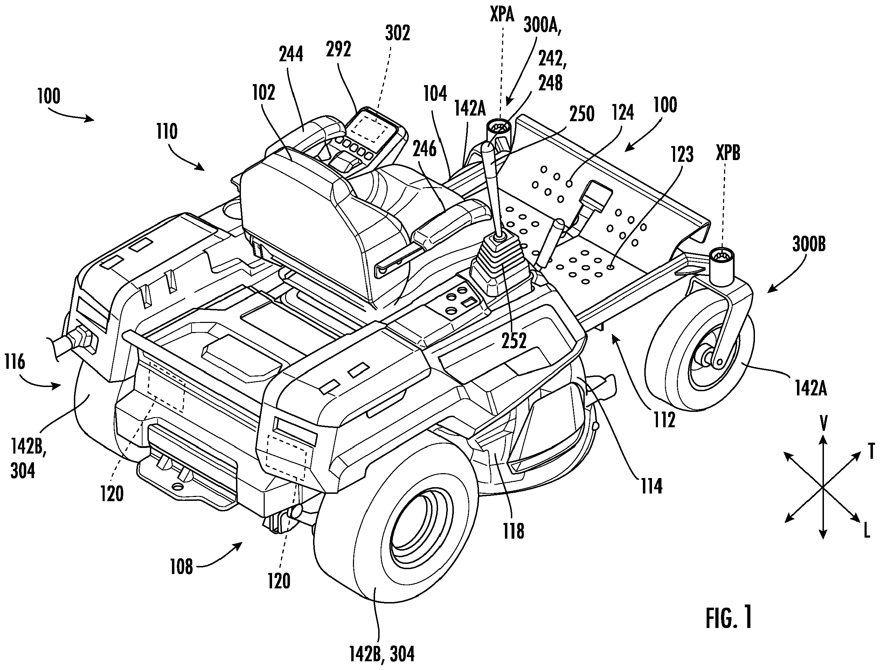

Turning now to the figures, FIG. 1 illustrates a perspective view of a lawnmower 100 in accordance with an exemplary embodiment of the present disclosure. The lawnmower 100 depicted in FIG. 1 is a riding lawn mower that includes a seat 102 configured to support a lawnmower 100 operator (hereinafter referred to as the "operator"). It is noted that although FIG. 1 illustrates a lawnmower 100, any other suitable tool device (e.g., tractor, snow blower, etc.) may be provided. Thus, the present disclosure is not limited to any particular tool device, except as otherwise indicated.

Generally, lawnmower 100 defines a mutually orthogonal vertical direction V, lateral direction L, and transverse direction T. As shown in FIG. 1, the seat 102 is coupled to a frame 104 which provides rigidity and structural support to the lawnmower 100. The frame 104 can extend between a front end 106 of the lawnmower 100 and a rear end 108 of the lawnmower 100. The frame 104 can extend between a left side 110 of the lawnmower 100 and a right side 112 of the lawnmower 100. In one or more instances, the frame 104 may extend continuously (i.e., be formed from one or more components connected together). In other instances, the frame 104 can be formed from separate, spaced apart components that are joined through different interfaces.

A mower deck 114 can be disposed at a vertical elevation below the seat 102. The mower deck 114 may also be disposed at least partially in front of the seat 102. At least a portion of the mower deck 114 may also be disposed below at least a portion of the frame 104. The mower deck 114 may be adjustable between a plurality of different heights, as measured relative to an underlying ground surface. For example, the mower deck 114 may be adjustable between at least two different heights, such as at least three different heights, such as at least four different heights, such as at least five different heights, such as at least six different heights, such as at least seven different heights, and so on. The operator can select a desired length of the grass by selecting between the different heights of the mower deck 114.

The mower deck 114 can include one or more walking elements, such as one or more wheels (e.g., 142A), such as caster wheels or omni-directional wheels. The wheel(s) can be configured to support the mower deck 114 relative to the underlying ground surface at least when the mower deck 114 is at the lowest height, i.e., closest to the underlying ground surface or when the mower deck 114 is removed from the frame 104. The wheel(s) of the mower deck 114 may also contact the ground, for example, when the mower deck 114 passes over uneven ground (independent of which height position the mower deck 114 is at). In such instances, the wheels of the mower deck 114 may contact one or more elevated portions of the ground and lift the mower deck 114 relative to the frame 104. This can allow the mower deck 114 to conform to the shape of the underlying ground surface to provide a more even mowing height. Other walking elements or wheels, such as one or more wheels (e.g., 142B) may be driven to rotate by a drive motor 120 (e.g., battery-powered motor or internal combustion engine) that is mechanically coupled to such wheels to propel the lawnmower 100 (e.g., forward or rearward) during use.

A floor 123 can be disposed above the mower deck 114. The floor 123 can be coupled with the frame 104. In certain instances, the floor 123 can define a textured surface to enhance grip and increase traction for the operator. In one or more embodiments, the textured surface may be integral with the floor 123. For example, the textured surface can include stamped ridges or frustoconical cutouts in the floor 123. In other embodiments, the textured surface may include a removable or discrete textured component which is coupled with the floor 123.

On or through the floor 123, a pedal may optionally be included. For instance, the pedal can be disposed at least partially within a cutout through the floor 123. The pedal can provide functionality for the operator. For instance, the pedal can be a brake pedal to allow the operator to brake the lawnmower 100. The pedal can include a park feature which allows the operator to selectively reconfigure the lawnmower 100 to a parked mode.

In certain embodiments, the lawnmower 100 further includes a footrest 124. By way of example, the footrest 124 can extend between and be supported by components of the frame 104. In the depicted embodiment, the frame 104 includes a cross member 126 extending between two lateral members. The footrest 124 can be disposed at a vertical elevation above the mower deck 114. In the depicted embodiment, the footrest 124 is disposed at the front end 106 of the lawnmower 100. In this regard, the operator can extend his or her feet forward to the footrest 124 for support, e.g., when seated on the lawnmower 100. The footrest 124 may also operate as a fender (or bumper) for the front end 106 of the lawnmower 100. In the event of impact, the footrest 124 can be easily swapped and replaced to reduce the costs associated with damage to the lawnmower 100.

The mower deck 114 can shield the operator from one or more cutting implements (not pictured) of the lawnmower 100. In an embodiment, the mower deck 114 can define one or more receiving areas that each house a cutting motor. The number of receiving areas and cutting motors can correspond with the number of discrete cutting implements of the lawnmower 100. For instance, the lawnmower 100 can include two cutting implements spaced apart from one another in a generally lateral (width) direction. In this regard, the mower deck 114 can include two receiving areas and two cutting motors. In another embodiment, the lawnmower 100 can include three cutting implements, four cutting implements, five cutting implements, or even six or more cutting implements, including more than one cutting element per receiving area (e.g., stacked).

As would be understood, the cutting motors can extend through the mower deck 114 such that a portion of the cutting motors is disposed above the mower deck 114 and another portion of the cutting motors is disposed below the mower deck 114. The cutting motors may be removably coupled to the mower deck 114 to allow easy access for service and repair.

As noted above, the lawnmower 100 can further include a walking element (e.g., one or more wheels 142A, 142B) configured to move the lawnmower 100 over the underlying ground surface. The walking element(s) may be attached to the frame 104 or deck 114 and can include, for example, one or more wheels, treads, or the like. In the depicted embodiment, the lawnmower 100 has four wheels including two front wheels 142A and two rear wheels 142B.

In an embodiment, the front wheels 142A can be passively rotated. That is, the front wheels 142A may not be actively driven. Instead, the front wheels 142A can passively support the weight of the lawnmower 100, operator, and other features described herein. As will be described in greater detail below, the front wheels 142A can be coupled to the frame 104 such that the front wheels 142A pivot about a corresponding pivot axis XP. Rotation of the front wheels 142A about 360 degrees of the pivot axis XP can permit the lawnmower 100 to turn without incurring a radius of turn. When combined with independent directional rotation of rear wheels 142B, i.e., one rear wheel 142B can rotate to drive the lawnmower forward while the other rear wheel 142B simultaneously rotates to drive the lawnmower 100 rearward, the lawnmower 100 can operate as a zero-turn radius (ZTR) lawnmower 100.

In some embodiments, the walking element is provided with or as one or more drive wheels 304. For instance, one or both of the rear wheels 142B can be powered (i.e., driven) by one or more drive motors 120 to propel the lawnmower 100. In an embodiment, the rear wheels 142B can be independently operable (e.g., operated at different speeds as compared to one another). For instance, the rear wheels 142B can be independently powered by separate motors or operate through interfaces configured to permit different relative displacement between the rear wheels 142B. Examples of such interfaces include slip clutches, gearboxes, and the like. The direction of travel of the lawnmower 100 may be adjusted by varying the speed and direction of each of the rear wheels 142B relative to one another. For instance, the lawnmower 100 can turn left when the right rear wheel 142B is operating faster than the left rear wheel 142B. Conversely, the lawnmower 100 can turn right when the left rear wheel 142B is operating faster than the right rear wheel 142B.

In some embodiments, the front wheels 142A are different from the rear wheels 142B. For instance, a diameter of the front wheels 142A can be less than a diameter of the rear wheels 142B. By way of another example, tire width of the front wheels 142A can be less than tire width of the rear wheels 142B. By way of yet another example, the front wheels 142A may have a different tread pattern (e.g., a lesser pronounced tread pattern) as compared to the rear wheels 142B.

In order to control the wheels or otherwise pilot the lawnmower 100, the cockpit of the lawnmower 100 can include a user interface 242. In optional embodiments, the user interface 242 is disposed on a first side of the seat 102. A first armrest 244 can be disposed on the first side of the seat 102. A second armrest 246 can be disposed on a second side of the seat 102, the second side of the seat 102 being opposite the first side. In an embodiment, the first and second armrests 244 and 246 can have different characteristics or operational capacities. For instance, the first and second armrests 244 and 246 can have different degrees of operational freedom. By way of example, the first armrest 244 may be pivotable relative to the seat 102 or static relative to the seat 102 while the second armrest 246 can pivot relative to the seat 102 and extend relative to the seat 102. In this regard, the second armrest 246 (on the lateral side of the seat 102 opposite the user interface 242) may be more adjustable (or have more degrees of operational freedom) than the first armrest 244.

The user interface 242 generally includes a user input, such as a joystick, lap bar set, steering wheel, etc. In the illustrated embodiments, the user input is provided by a joystick 248 having a handle 250 (e.g., extending from a boot 252). The boot 252 may be sealed relative to at least one of the joystick 248 or handle 250 to prevent ingress of debris into the components of the user interface 242. While the user interface 242 is depicted on a right lateral side of the seat 102, in another embodiment, the user interface 242 can be disposed at a different location within the cockpit, such as on a left lateral side of the seat 102. In one or more embodiments, the user interface 242 can be swappable between the left and right lateral sides of the lawnmower 100.

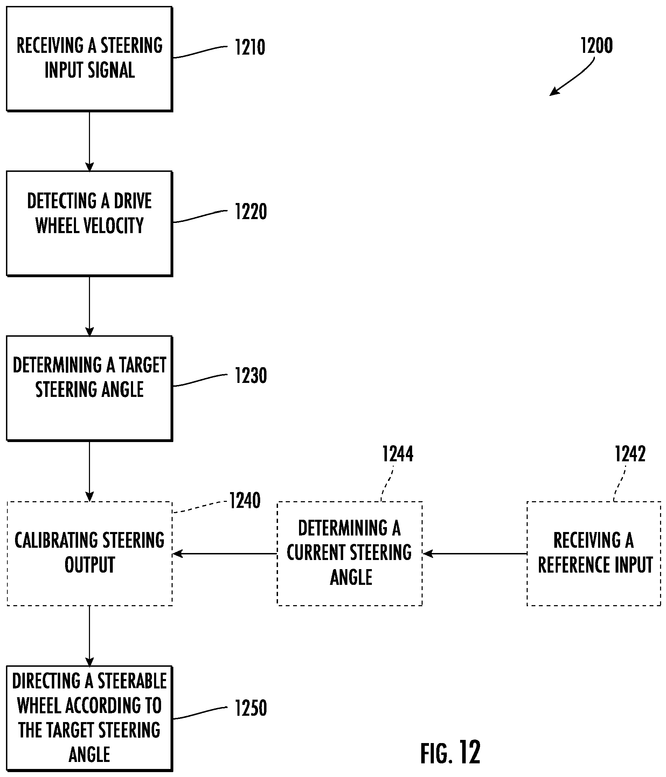

In certain embodiments, joystick 248 can steer the lawnmower 100 and provide throttle for moving the lawnmower 100 (e.g., in the place of traditional lap bars, steering wheels, or foot pedals). For instance, the joystick 248 may be configured to move about one or more of a yaw axis, a roll axis, and a pitch axis. Optionally, the joystick 248 may be able to pivot about one or more of the three axes and translate along at least one of the three axes. In order to detect movement of the joystick 248, one or more of contact sensors, gimbals, gyroscopes, hall effect sensors, visual sensors, orientation sensors, electro-mechanical sensors, micro-electro-mechanical sensors (MEMS), or the like may be provided (e.g., as part of an input detection system). The joystick 248 (and detection system thereof), or user interface 242 generally, may be in communication with a controller 302 (i.e., one or more controllers). The controller 302 may include a memory and one or more microprocessors, CPUs or the like, such as general or special purpose microprocessors operable to execute programming instructions or micro-control code associated with operation of lawnmower 100. The memory may represent random access memory such as DRAM, or read only memory such as ROM or FLASH. In some embodiments, the processor(s) execute non-transitory programming instructions stored in memory. For certain embodiments, the instructions include a software package configured to operate lawnmower 100 or execute an operation routine (e.g., the exemplary method 1200 described below with reference to FIG. 12). The memory may be a separate component from the processor or may be included onboard within the processor. Alternatively, controller 302 may be constructed without using a microprocessor (e.g., using a combination of discrete analog or digital logic circuitry; such as switches, amplifiers, integrators, comparators, flip-flops, AND gates, and the like) to perform control functionality instead of relying upon software.

Controller 302 may be positioned in a variety of locations throughout lawnmower 100. Input/output ("I/O") signals may be routed between controller 302 and various operational components or other controllers of lawnmower 100. One or more components of lawnmower 100 may be in operative communication (e.g., electric communication) with controller 302 via one or more conductive signal lines or shared communication busses.

Generally, the position of the joystick 248 can be detected (e.g., about any one or more of the yaw axis, the roll axis, and the pitch axis). The detected displacement may be measured relative to the position of the joystick 248 at a home position (i.e., unbiased and static).

The relative amount of displacement detected along each of the active axes can inform a particular portion of a mixing algorithm which controls the walking element and any steerable-wheel assemblies 300.

The following mixing algorithms are provided for exemplary purposes only and are not intended to limit the scope of the disclosure.

In a first mixing algorithm, the joystick 248 can exhibit detected displacement about both the pitch and roll axis. Movement may be prohibited about the yaw axis or, if the joystick can move about the yaw axis, not detected. The first mixing algorithm can output a direction as a result of detected displacement about the roll axis and a throttle response as a result of detected displacement about the pitch axis. Clockwise movement about the roll axis can turn the lawnmower 100 right while counterclockwise movement about the roll axis turns the lawnmower 100 left. Forward movement about the pitch axis can move the lawnmower 100 forward while rearward movement about the pitch axis can move the lawnmower 100 backwards.

In a second mixing algorithm, steering is performed by rotating the joystick 248 about the yaw axis while throttle response is a result of displacing the joystick 248 about the pitch axis.

In optional embodiments, the lawnmower 100 furthers include a human machine interface (HMI) 292 different from the user interface 242. The HMI 292 may be positioned in a location accessible to the user while seated in seat 102. For example, an HMI 292 may be positioned adjacent to either of armrest 244, 246. The HMI 292 may both convey information to the operator and receive inputs from the operator. Optionally, the HMI 292 may include a display. By way of non-limiting example, the display can be a light-emitting diode (LED) display, an organic light-emitting diode (OLED) display, an electroluminescent display (ELD), a plasma display panel (PDP), a liquid crystal display (LCD), a digital light processing (DLP) display, or the like. The display can receive electrical power from one or more batteries of the lawnmower 100. In an embodiment, the display may automatically turn on when the lawnmower 100 is initiated or used. In other embodiments, the operator can selectively turn on and off the display.

Generally, the display can display information to the operator. The information can include, for example, a status of the battery (e.g., strength of charge), a headlight indicator, a Bluetooth indicator, an operational indicator (e.g., displaying drive or park), a cutting implement speed gauge, a wheel speed gauge, and the like. In some instances, the display can toggle between a plurality of screens, with each screen depicted a different type of information or a different arrangement of information.

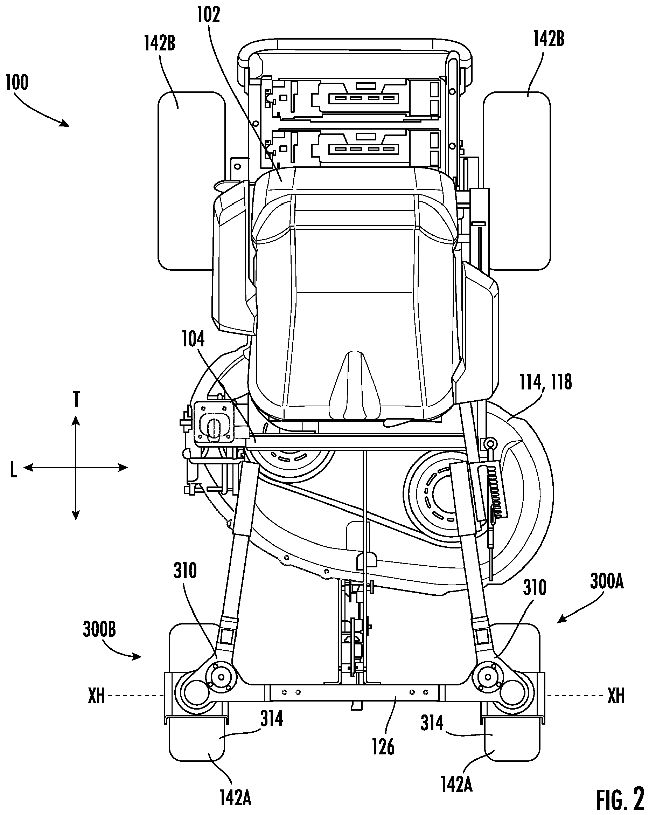

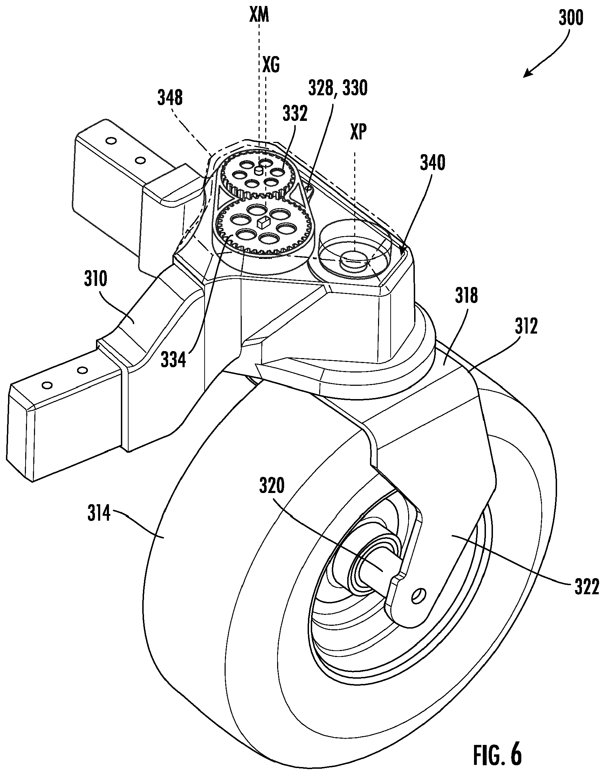

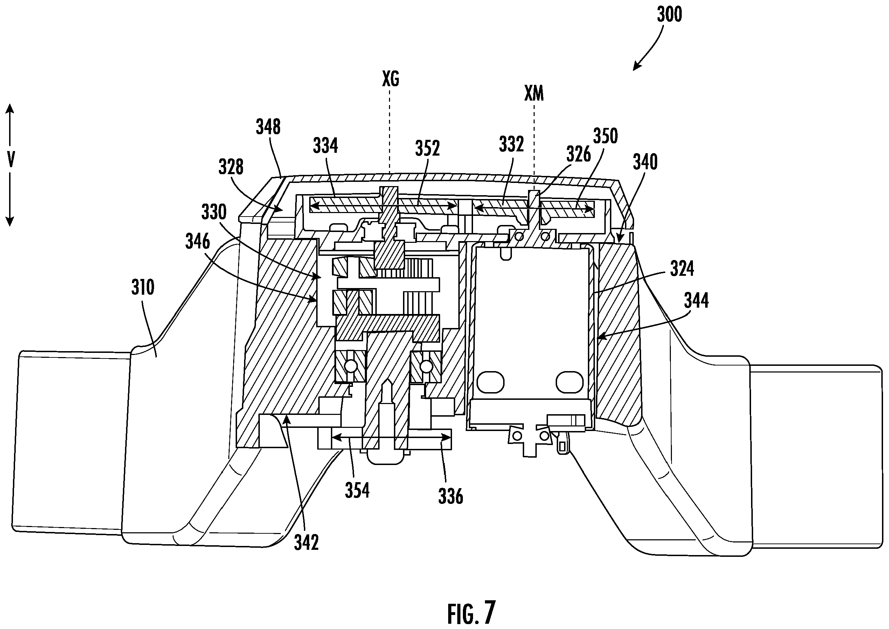

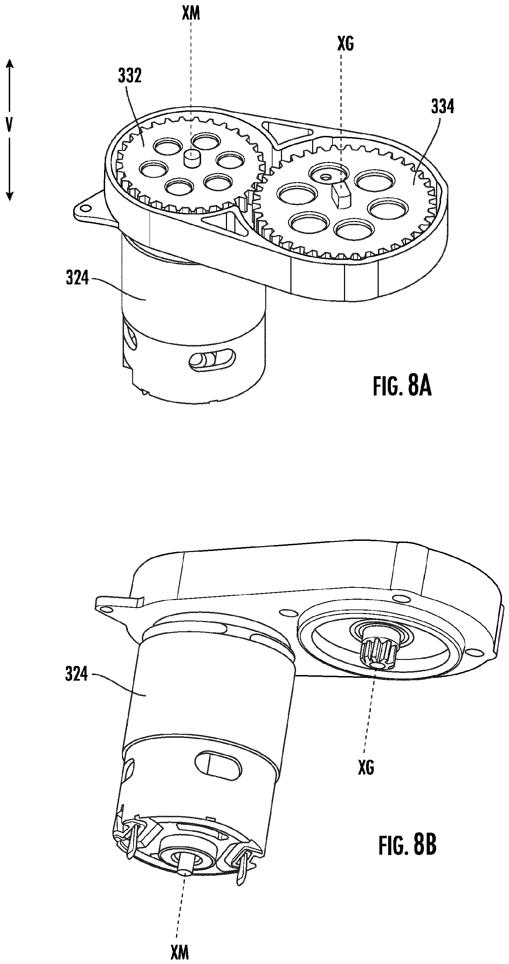

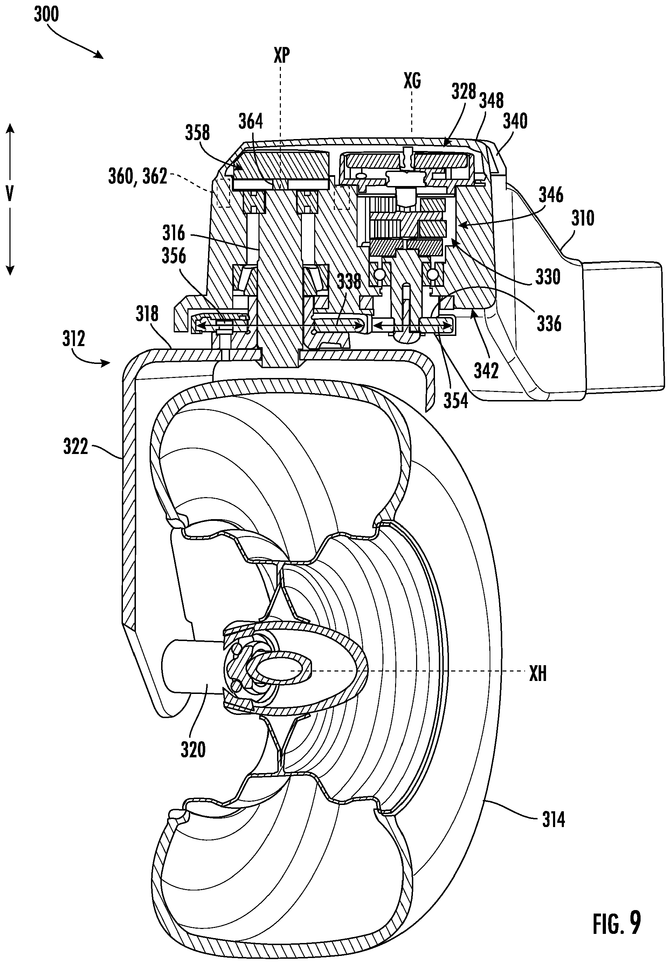

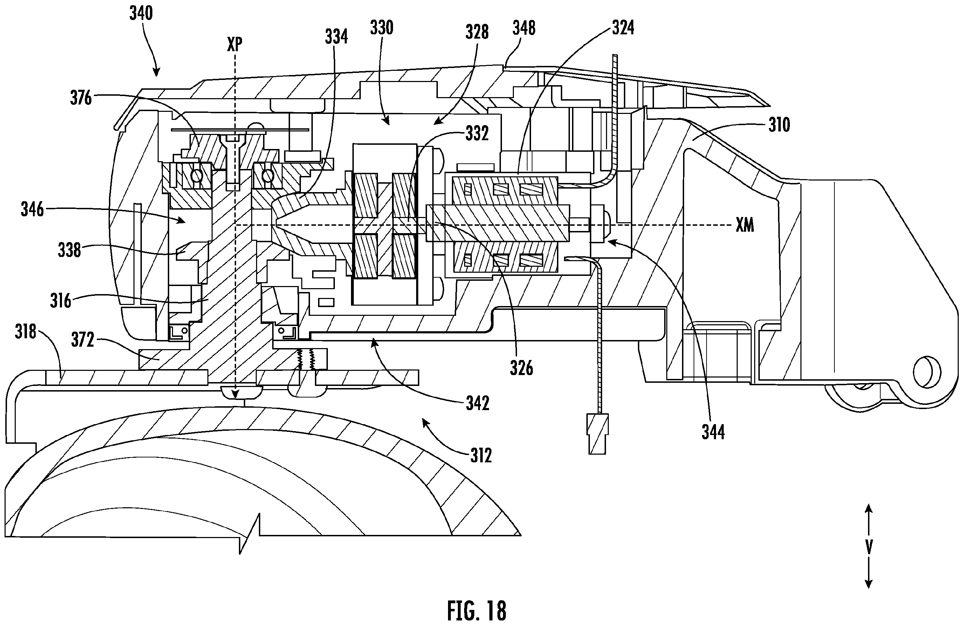

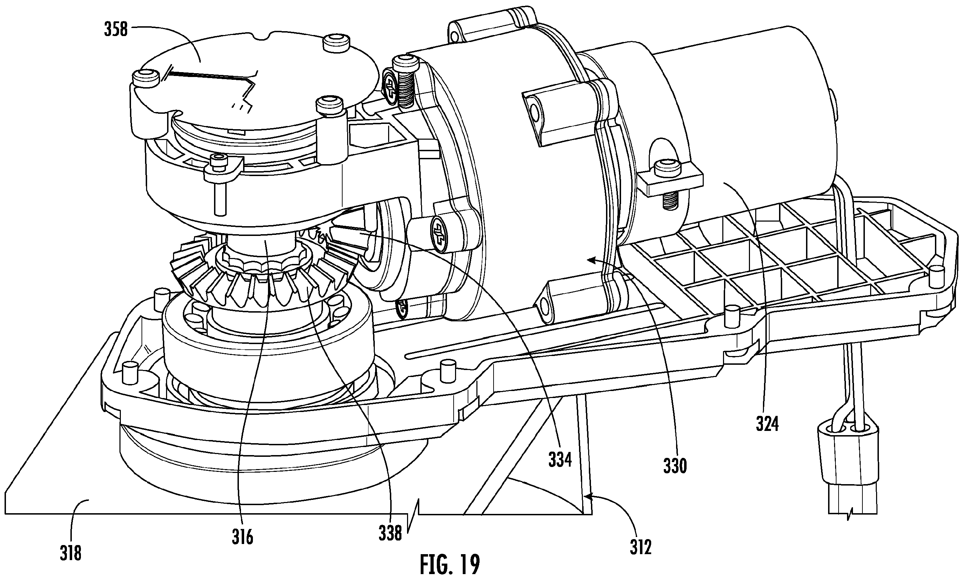

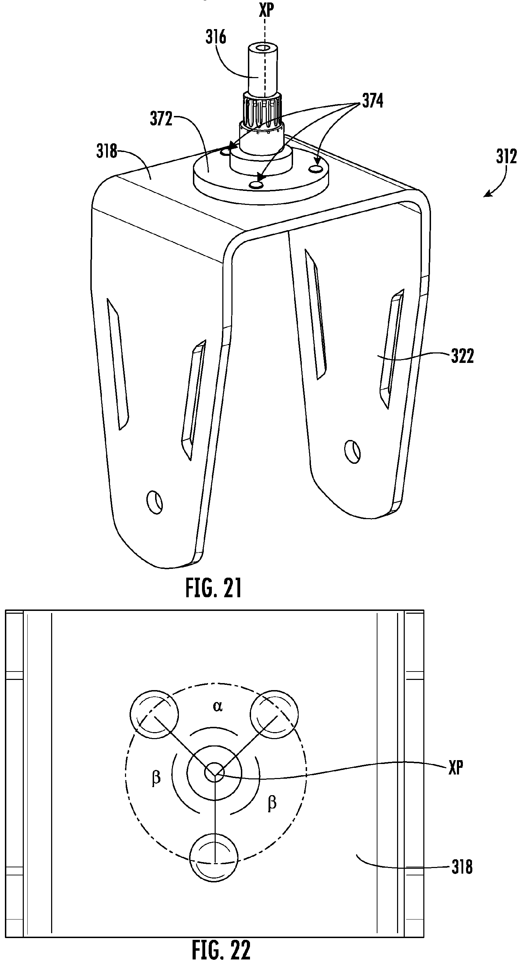

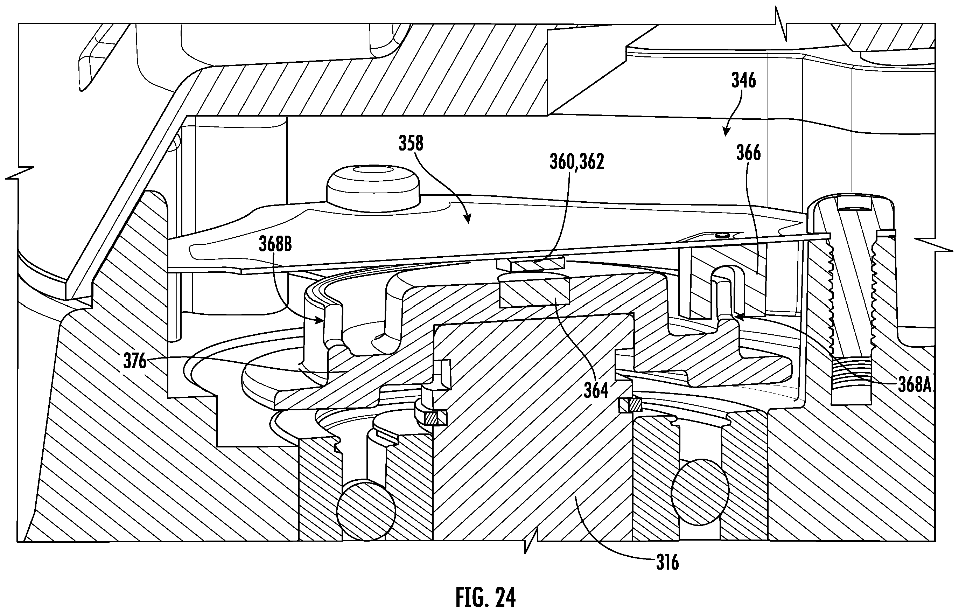

Turning now generally to FIGS. 2 through 11 and 17 through 30, one or more steerable-wheel assemblies (SWAs) 300 may be provided to direct lawnmower 100. Such SWAs 300 may be attached (e.g., mounted or joined to frame 104). For instance, a support arm 310 of frame 104 may extend (e.g., horizontally outward) or otherwise away from deck 114. Optionally, a SWA 300 may be disposed on a distal or terminal end of a corresponding support arm 310.

One or more (e.g., a pair of) SWAs 300 may be provided at the front of lawnmower 100 (e.g., with or in place of front wheels 142A, as described above), apart from the walking element(s) (e.g., rear wheels 142B) or drive motor(s) 120. When assembled, the drive motor(s) 120 may be disposed rearward from the pair of SWAs 300. In the illustrated embodiments, a pair of SWAs (e.g., first SWA 300A and second SWA 300B) is shown. Moreover, it is understood that each of the pair of SWAs may be substantially identical or mirror images of each other. Thus, although a single SWA 300 is generally described below, it is understood that such descriptions may be applicable to either or both of the pair of illustrated SWAs 300A, 300B. During use, the corresponding steerable wheel 314 of each SWA 300A and 300B may be rotated (e.g., independently or, alternatively, in tandem) about a separate corresponding axis (e.g., first pivot axis XPA and second pivot axis XPB, which may be parallel to each other or the vertical direction V).

As shown, a SWA 300 may generally include a caster connector such as a caster connector 312 and a steerable wheel 314 that is attached (e.g., rotatably coupled) to the caster connector or connector 312. Caster connector 312 (e.g., fork, post, or prong) may be pivotably mounted to support arm 310 (e.g., at the support arm 310). Moreover, caster connector 312 may define a pivot axis XP (e.g., vertical axis) about which caster connector 312 pivots. For instance, a pivot rod 316 of caster connector 312 may extend (e.g., vertically) into or through at least a portion of support arm 310 (e.g., at a cavity defined by support arm 310). Additionally or alternatively, pivot rod 316 may be parallel or coaxial to pivot axis XP (e.g., such that pivot rod 316 extends along pivot axis XP).

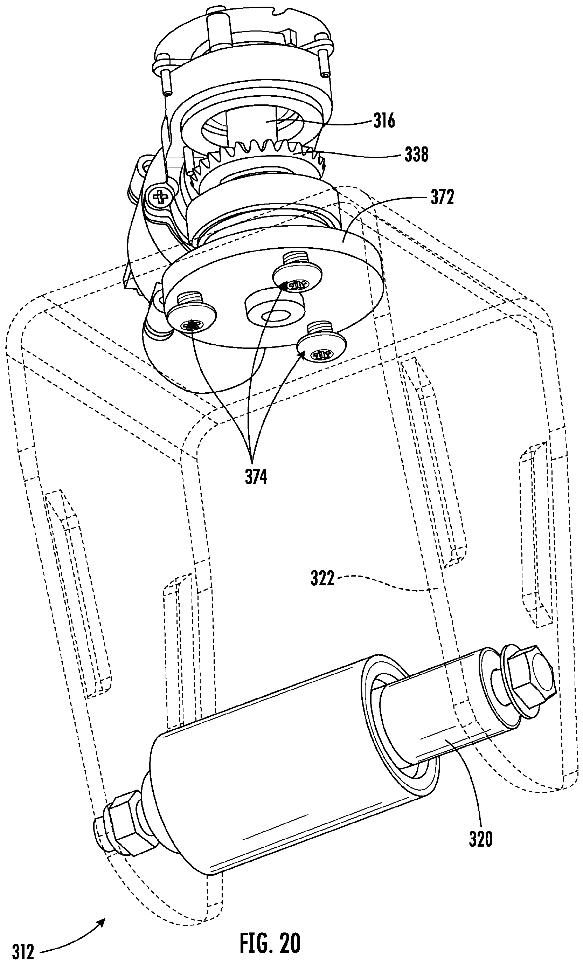

Apart from or outside of support arm 310, an assembly bracket 318 may be joined to pivot rod 316. For instance, assembly bracket 318 may be disposed below support arm 310 (e.g., at a lower or bottom end of pivot axis XP). In some embodiments, assembly bracket 318 is fixed to pivot rod 316 (e.g., as a unitary or multi-piece assembly) and, thus, pivots therewith about pivot axis XP. As an example, and turning briefly to FIGS. 20 through 22, pivot rod 316 may be selectively fixed relative to assembly bracket 318 as part of a multi-piece assembly. In some such embodiments, caster connector 312 includes a rod flange 372 that extends radially from pivot rod 316 (e.g., outward from or perpendicular to pivot rod 316 or pivot axis XP).

Generally, rod flange 372 may be fixed to or formed with pivot rod 316 and, in turn, may rotate therewith relative to pivot axis XP. When assembled, rod flange 372 may be held outside of (e.g., below) support arm 310 and form at least a portion of the interface joint between pivot rod 316 and assembly bracket 318. For instance, rod flange 372 may define one or more mounting points 374 at which pivot rod 316 is joined to assembly bracket 318. Generally, such mounting points 374 provide a location (e.g., aperture), which may be over assembly bracket 318 and at which a fastener (e.g., mechanical fastener-such as a bolt, nut, screw, clamp, etc.; weld; or adhesive) mutually engages rod flange 372 and a corresponding portion of assembly bracket 318. In the illustrated embodiments, the mounting points 374 define corresponding apertures with assembly bracket 318 and through which a bolt may pass. In certain embodiments, three or more mounting points 374 over the assembly bracket, the three or more mounting points 374 may be circumferentially spaced apart. For instance, such mounting points 374 may be provided at the same radial distance while being located at discrete angular positions about the pivot rod 316 or pivot axis XP. Optionally, the mounting points 374 may be circumferentially spaced at two or more angles about the pivot axis XP. Thus, the angular position or spacing between circumferentially adjacent mounting points 374 may not all be identical. For instance, at least one circumferential spacing may be defined at a first angle α while one or more other circumferential spacings are defined at a second angle β. Notably, a predetermined orientation may be maintained or ensured (e.g., during assembly or repair processes). Additionally or alternatively, the assembly bracket 318 (e.g., including tines 322) may advantageously define a targeted failure point such that certain anticipated damage actions (e.g., impacting a solid stone or rock) at the assembly bracket 318 may be prevented from damaging other portions of SWA 300 (e.g., one or more gears thereof), which may be more difficult, expensive, or time-consuming to repair. Moreover, repairs may further be advantageously simplified, such as with the mounting arrangement of pivot rod 316 or spacing of mounting points 374.

Returning generally to FIGS. 2 through 11 and 17 through 30, in certain embodiments, assembly bracket 318 provides the interface or attachment structure between steerable wheel 314 and caster connector 312. Specifically, steerable wheel 314 may be rotatably supported on assembly bracket 318. For instance, a wheel pin 320 may extend (e.g., horizontally) from a portion of assembly bracket 318 (e.g., between a pair of joint tines 322). Steerable wheel 314 may be rotatably disposed on wheel pin 320 and, thus, rotate about wheel pin 320 (e.g., about a horizontal axis XH that is defined by wheel pin 320 or otherwise apart from pivot axis XP). Moreover, steerable wheel 314 may be pivoted (e.g., with assembly bracket 318) to change the directional angle or steering direction of steerable wheel 314 as it continues to rotate about the horizontal axis XH. Optionally, pivot axis XP may intersect horizontal axis XH (i.e., such that the pivot axis of the steerable wheel is not radially offset from the horizontal axis of the steerable wheel, which is in contrast to some traditional caster wheel configurations).

As shown, an assembly motor 324 is provided to motivate pivoting or otherwise set the directional angle of caster connector 312 (and thus steerable wheel 314) about the pivot axis XP. For instance, assembly motor 324 may be in mechanical communication with caster connector 312. Assembly motor 324 may be fixed to frame 104 (e.g., at or within support arm 310). Thus, assembly motor 324 may generally move with support arm 310 and remain relatively static with respect to support arm 310, even while caster connector 312 is pivoted relative to support arm 310. Generally, assembly motor 324 is any suitable compact motor (e.g., electronic, brushless, DC motor) in operable (e.g., electrical or wireless) communication with controller 302.

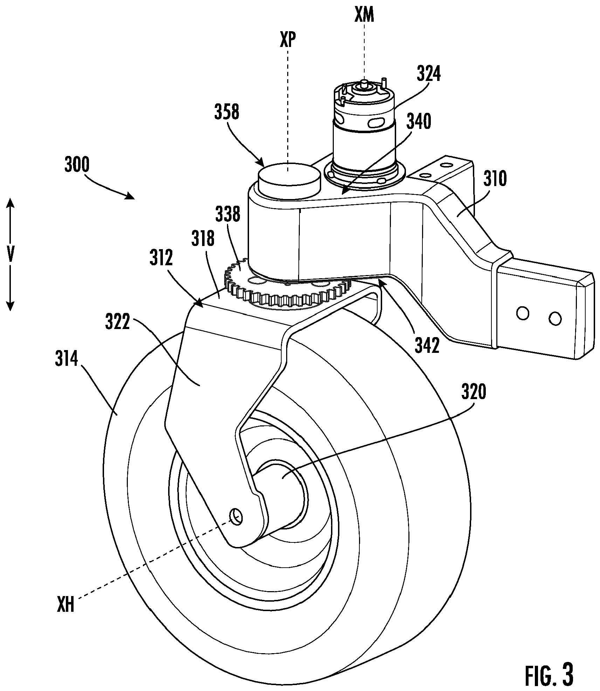

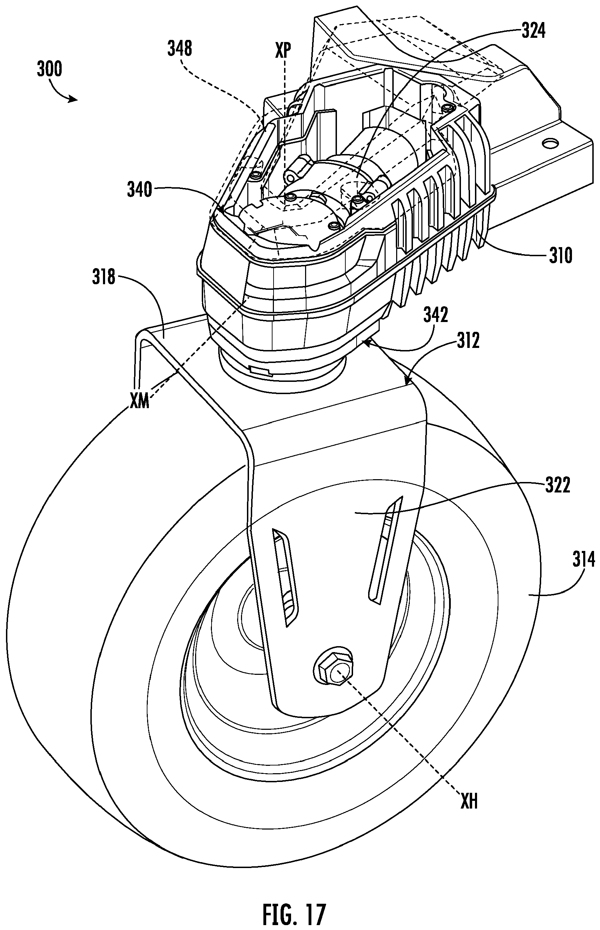

In certain embodiments, assembly motor 324 is radially offset from caster connector 312. A drive shaft 326 of assembly motor 324 may thus be disposed along and rotatable about a set motor axis XM that is non-coaxial with pivot axis XP. Optionally, the motor axis XM and pivot axis XP may be substantially or entirely parallel (e.g., vertical) axes, as illustrated in FIGS. 3 through 10. Alternatively, the motor axis XM and pivot axis XP may be substantially or entirely orthogonal relative to each other. For instance, as illustrated in FIGS. 17 through 20, motor axis XM may extend along a non-vertical or horizontal direction (e.g., perpendicular to the vertical direction V). Separate from or in addition to the orientation of the axes XM and XP, a gear train 328 may mechanically couple drive shaft 326 and caster connector 312 (e.g., establish mechanical communication either directly or, alternatively, indirectly between drive shaft 326 and caster connector 312). Thus, rotation (or relative movement of the directional angle) of the drive shaft 326 about motor axis XM may be transmitted or translated to the caster connector 312 through gear train 328.

In some embodiments, the gear train 328 is provided as or includes a reduction gear set 330. Thus, the caster connector 312 may be pivoted at a slower rotational velocity than is input directly by assembly motor 324 (e.g., at drive shaft 326). Moreover, torque from the assembly motor 324 may be magnified. In optional embodiments, the total reduction ratio (assembly motor 324 : caster connector 312) is greater than or equal to 12:1 (e.g., greater than or equal to 15:1, 20:1, 35:1, or 90:1).

As shown, the reduction gear set 330 may be held within a gear cavity 346 defined by support arm 310. For instance, one or more planetary gear sets may be provided (e.g., coaxial with motor axis XM or pivot axis XP) as or as part of reduction gear set 330. Each planetary gear set may have multiple planetary gears enmeshed or rotatable about one or more sun gears. At least one sun gear may be coupled (e.g., directly or indirectly) to drive shaft 326 to be rotated by drive shaft 326 and, in turn, rotate multiple planetary gears enmeshed within sun gear. Additionally or alternatively, one or more ring gears may be enmeshed with and extend radially outward from various planetary gears.

Separate from or in addition to the planetary gear set, a set of separate radially offset gears, such a helical spur gears or bevel gears, may be provided as part of the gear train 328. For instance, a primary drive gear 332, primary driven gear 334, and a secondary driven gear 338 may be mechanically coupled.

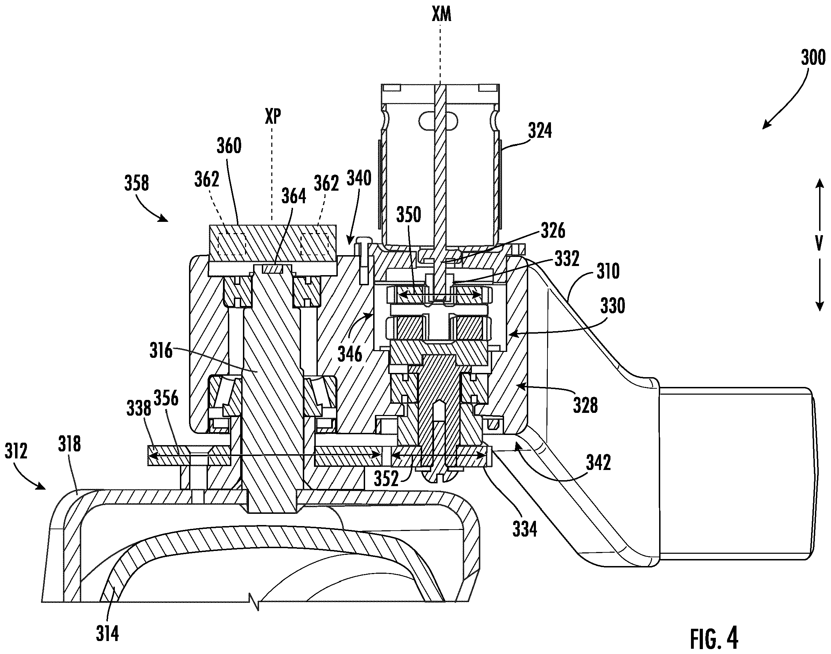

Turning especially to FIGS. 3 and 4, in some embodiments, the primary drive gear 332 is mechanically coupled (e.g., indirectly joined via one or more intermediate gears) to the assembly motor 324 (e.g., at the drive shaft 326) above a lower end 342 of support arm 310. For instance, primary drive gear 332 may be coupled to assembly motor 324 at an upper end 340 of the support arm 310. As shown, the upper end 340 is opposite the lower end 342 (e.g., relative to the vertical direction V) and may be directed upward (e.g., while the lower end 342 is directed downward, generally toward the ground). The assembly motor 324 may extend or be held above the primary drive gear 332. In particular, the assembly motor 324 may be held outside of support arm 310 or any cavity thereof. The primary drive gear 332 may be mechanically coupled (e.g., indirectly joined) to the primary driven gear 334. For instance, the planetary gear set may couple primary drive gear 332 to primary driven gear 334. Primary driven gear 334 may be coaxial with primary drive gear 332 (e.g., coaxial with drive shaft 326 along motor axis XM). Additionally or alternatively, primary driven gear 334 may be disposed at or below the lower end 342 of support arm 310. Adjacent to primary driven gear 334, a secondary driven gear 338 may be disposed. In particular, secondary driven gear 338 may be disposed on the caster connector 312. For instance, secondary driven gear 338 may be fixed to pivot rod 316 or caster connector 312 (e.g., via one or more mechanical fasteners-such a bolt, nut, screw, clamp, etc.; welds; or adhesives), while be mechanically coupled (e.g., enmeshed with) primary driven gear 334. Secondary driven gear 338 may be coaxial with pivot axis XP. Rotation of secondary driven gear 338 may be transmitted (e.g., directly) to caster connector 312. In turn, secondary driven gear 338 may direct rotation of the steerable wheel 314.

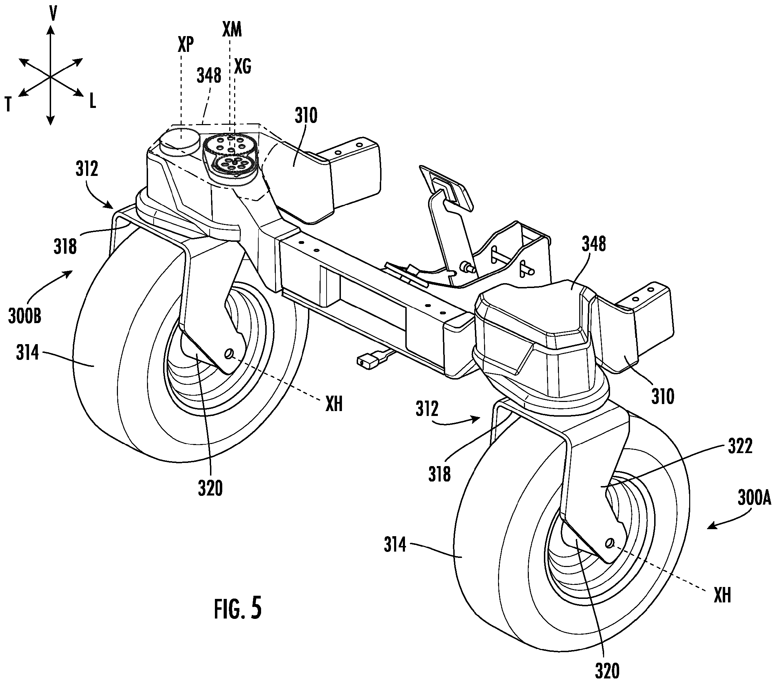

Turning especially to FIGS. 5 through 10, in some embodiments, the arrangement of the motors and gears may be different (e.g., in comparison to the embodiments illustrated in FIGS. 3 and 4). For example, as shown, the assembly motor 324 may extend or be held below the primary drive gear 332. In particular, the assembly motor 324 may be held within the support arm 310 (e.g., above the lower end 342 within a discrete motor cavity 344, which may be apart from or parallel to a gear cavity 346). In certain embodiments, the primary drive gear 332 is mechanically coupled (e.g., directly joined) to the assembly motor 324 (e.g., at the drive shaft 326) at an upper end 340 of the support arm 310. As shown, the upper end 340 is opposite a lower end 342 (e.g., relative to the vertical direction V) and may be directed upward (e.g., while the lower end 342 is directed downward or to the ground). The primary drive gear 332 may be mechanically coupled (e.g., directly joined) to the primary driven gear 334. For instance, primary drive gear 332 may be fixed to drive shaft 326 to rotate therewith about motor axis XM.

Primary driven gear 334 may be radially offset from motor axis XM. In some embodiments, primary driven gear 334 is disposed along (e.g., to rotate about) a gear axis XG non-coaxial with motor axis XM or pivot axis XP. Optionally, gear axis XG may be substantially or entirely parallel to one or both of motor axis XM and pivot axis XP. Additionally or alternatively, primary driven gear 334 may be disposed at the upper end 340 of support arm 310. When assembled, primary driven gear 334 may be mechanically coupled to (e.g., enmeshed with) primary drive gear 332. Optionally, primary driven gear 334 may be coplanar with, or disposed at the same height as, primary drive gear 332. A guard cap 348 or other cover may be disposed over primary drive gear 332 and primary driven gear 334. Generally, primary driven gear 334 may be larger than primary drive gear 332. In particular, primary drive gear 332 may define a reference diameter (PERD) 350, such as in a radial direction perpendicular to motor axis XM (or the axis about which primary drive gear 332 otherwise rotates). Primary driven gear 334 may define its own reference diameter (PNRD) 352, such as in a radial direction perpendicular to gear axis XG (or the axis about which primary driven gear 334 otherwise rotates). When compared (e.g., within parallel planes), the PERD 350 may be less than or substantially equal to the PNRD 352.

In certain embodiments, the primary driven gear 334 is mechanically coupled (e.g., indirectly joined) to a secondary drive gear 336 apart (and mechanically downstream from) primary drive gear 332. For instance, secondary drive gear 336 may be mechanically coupled to the primary driven gear 334 through the reduction gear set 330. For instance, a planetary gear set, such as the planetary gear set described above with respect to FIGS. 3 and 4, may couple primary driven gear 334 to secondary drive gear 336. Secondary drive gear 336 may be coaxial with primary driven gear 334 (e.g., coaxial with the planetary gear set along gear axis XG). Secondary drive gear 336 may be disposed at a lower end 342 of the support arm 310 (e.g., below primary driven gear 334).

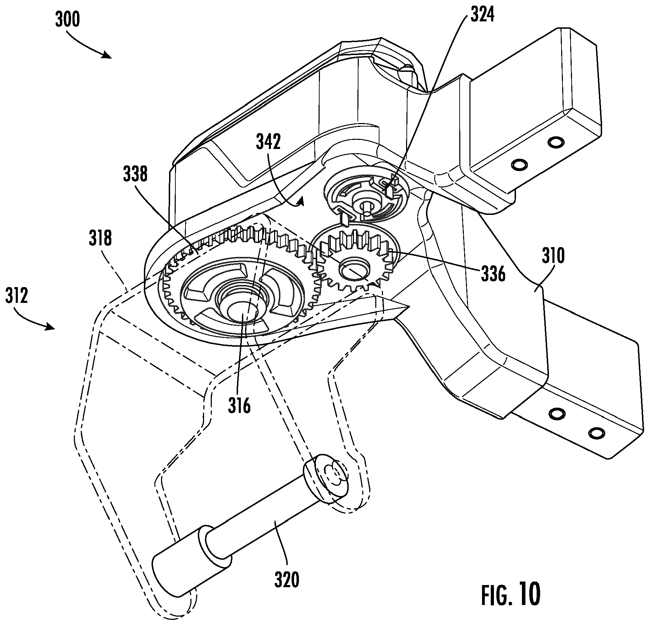

Secondary driven gear 338 (see e.g., FIG. 10) may be radially offset from gear axis XG. In some embodiments, secondary driven gear 338 is disposed along (e.g., to rotate about) pivot axis XP, which may be non-coaxial with motor axis XM or gear axis XG. Optionally, pivot axis XP may be parallel to gear axis XG or motor axis XM. Additionally or alternatively, secondary driven gear 338 may be disposed at the lower end 342 of support arm 310. When assembled, secondary driven gear 338 may be mechanically coupled to (e.g., enmeshed with) secondary drive gear 336. Optionally, secondary driven gear 338 may be coplanar with, or disposed at the same height as, secondary drive gear 336. Generally, secondary driven gear 338 may be larger than secondary drive gear 336. In particular, secondary drive gear 336 may define a reference diameter (SERD) 354, such as in a radial direction perpendicular to gear axis XG (or the axis about which secondary drive gear 336 otherwise rotates). Secondary driven gear 338 may define its own reference diameter (SNRD) 356, such as in a radial direction perpendicular to pivot axis XP (or the axis about which secondary driven gear 338 otherwise rotates). When compared (e.g., within parallel planes), the SERD 354 may be less than the SNRD 356.

Turning especially to FIGS. 17 through 20, in some embodiments, the arrangement of the motors and gears may be different (e.g., in comparison to the embodiments illustrated in FIGS. 3 and 4 or 5 through 10). For example, as shown, the assembly motor 324 may extend along a non-vertical direction above the lower end 342. In particular, the assembly motor 324 may be held within the support arm 310 (e.g., above the lower end 342 within a discrete motor cavity 344, which may extend from or be continuous with a gear cavity 346). In certain embodiments, the primary drive gear 332 is mechanically coupled (e.g., directly joined) to the assembly motor 324 (e.g., at the drive shaft 326) below the upper end 340 of the support arm 310. The primary drive gear 332 may be mechanically coupled (e.g., directly joined) to the primary driven gear 334. For instance, primary drive gear 332 may be fixed to drive shaft 326 to rotate therewith about motor axis XM.

Primary driven gear 334 may be offset (e.g., axially) from primary drive gear 332. In some embodiments, the primary driven gear 334 is mechanically coupled (e.g., indirectly joined) to primary drive gear 332. In particular, primary driven gear 334 may be mechanically coupled to the primary drive gear 332 through the reduction gear set 330. For instance, a planetary gear set, such as the planetary gear set described above, may couple primary drive gear 332 to primary driven gear 334. Primary driven gear 334 may be coaxial with primary drive gear 332 (e.g., coaxial with the primary drive gear 332 along motor axis XM). Secondary driven gear 338 may be disposed above the lower end 342 of the support arm 310 (e.g., below the upper end 340 within the gear cavity 346, which may be continuous or in fluid communication with the motor cavity 344).

In some embodiments, the primary driven gear 334 is mechanically coupled to (e.g., in direct mechanical communication with) the secondary driven gear 338 . As shown, secondary driven gear 338 may be disposed adjacent to primary driven gear 334 (e.g., within gear cavity 346). For instance, primary driven gear 334 may include or be provided as a bevel gear mated or enmeshed with another bevel gear (e.g., provided as or as a part of secondary driven gear 338 ) that is oriented at (e.g., to rotate about) a separate, non-parallel axis. In the illustrated embodiments, primary driven gear 334 and secondary driven gear 338 are provided as enmeshed bevel gears (e.g., having a set gear reduction ratio to the secondary driven gear 338 ) disposed along (e.g., to rotate about) the motor axis XM and pivot axis XP, respectively.

When assembled, secondary driven gear 338 may be disposed on the caster connector 312. For instance, secondary driven gear 338 may be fixed to pivot rod 316 or caster connector 312 (e.g., via one or more mechanical fasteners-such a bolt, nut, screw, clamp, etc.; welds; or adhesives), while being mechanically coupled (e.g., enmeshed with) primary driven gear 334. Secondary driven gear 338 may be coaxial with pivot axis XP. Rotation of secondary driven gear 338 may be transmitted (e.g., directly) to caster connector 312. In turn, secondary driven gear 338 may direct rotation of the steerable wheel 314.

It is noted that in any of the embodiment disclosed and discussed herein, the orientation of the gears and motors (e.g., their location relative to upper end 340 or lower end 342 of support arm 310) may be inverted.

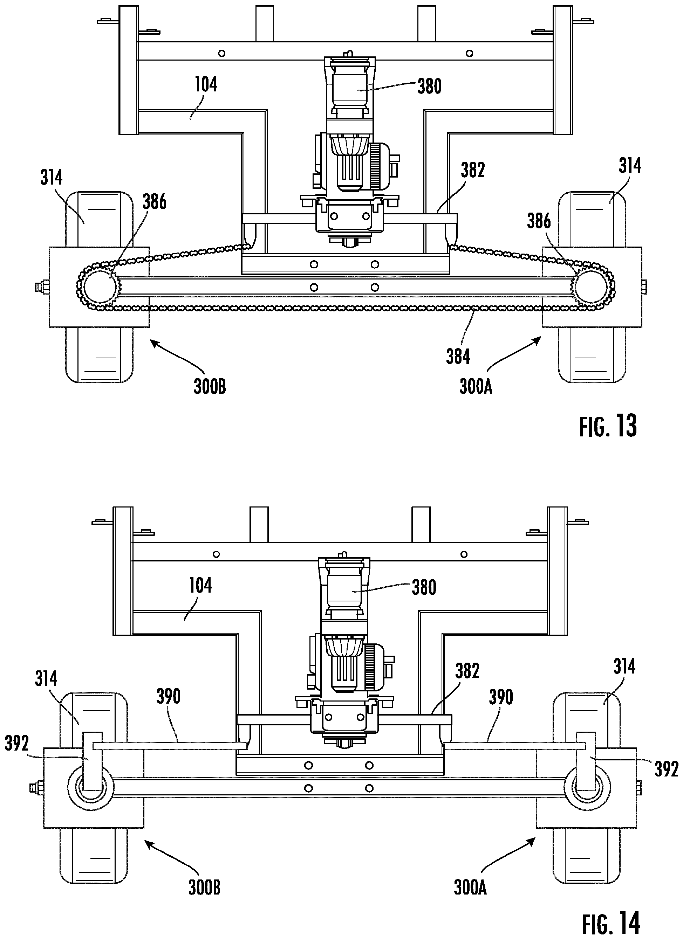

Turning briefly to FIGS. 13 and 14, it is further noted that although a discrete assembly motor 324 is illustrated for each SWA 300 in FIGS. 4 through 11, alternative embodiments may include a single joint assembly motor 380 in communication with multiple SWAs (e.g., SWA 300A and SWA 300B) to simultaneously motivate, pivot, or otherwise direct (e.g., hold in a set directional angle) such SWAs. For instance, assembly motor 380 may be mounted apart from support arms or steerable wheels 314, such as to a central portion of frame 104. In some embodiments, joint assembly motor 380 is positioned rearward from the SWAs 300A, 300B.

An intermediate joint gear train may further mechanically couple joint assembly motor 380 to a joint assembly bracket 382. In turn, rotational movement of the joint assembly motor 380 may be transferred (and optionally transformed or translated) to the joint assembly bracket 382). As an example, a rack-and-pinion gear set may be provided to translate the rotational movement at the joint assembly motor 380 into lateral movement at the joint assembly bracket 382.

In some such embodiments (e.g., FIG. 13), an assembly chain 384 may mechanically couple joint assembly bracket 382 to each SWA 300A and 300B. For instance, the assembly chain 384 may be fixed to opposite lateral ends of bracket 382 while wrapping around at least a portion of discrete wheel gears 384 coupled with the different corresponding wheels 314. As the bracket 382 moves laterally, the chain 384 may also be moved and thereby force wheel gears 384 to pivot about their corresponding axes, which may in turn similarly pivot the wheels 314 to set a joint directional angle for the SWAs 300A, 300B.

In other such embodiments (e.g., FIG. 14), a pair of wheel linkages 390 may mechanically couple joint assembly bracket 382 to each SWA 300A and 300B. For instance, one linkage 390 may be fixed to one (e.g., first) lateral end of bracket 382 while another linkage 390 is fixed to the opposite (e.g., second) lateral end of bracket 382. Each linkage 390 may further be coupled (e.g., pivotably coupled) with a discrete offset wheel strut 392, which is further coupled to a corresponding wheel 384. As the bracket 382 moves laterally, the linkages 290 may also be moved and thereby force the struts to pivot about the corresponding axes of the SWAs 300A, 300B. In turn, the wheels 314 may be similarly pivoted to set a joint directional angle for the SWAs 300A, 300B.

In any of the embodiments disclosed herein, an angle (e.g., first) sensor 358 may be provided with SWA 300. Generally, angle sensor 358 may be configured to detect a pivotable position (e.g., directional angle) of caster connector 312 or steerable wheel 314 about pivot axis XP. In particular, angle sensor 358 may detect what pivotable position (e.g., out of three or any number of positions) of caster connector 312 is disposed at relative to pivot axis XP or support arm 310. Thus, angle sensor 358 may generally detect the direction at which caster connector 312 is aimed relative to the transverse or lateral directions T, L (or angle about pivot axis XP).

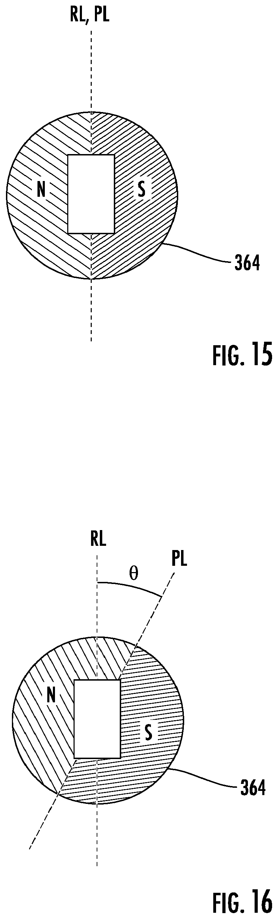

Detection of angle sensor 358 may be provided, at least in part, from detection of a magnetic field. For instance, SWA 300 may include a detectable magnet 364 (e.g., permanent magnet) that is fixed to caster connector 312 (e.g., on assembly bracket 318) and, thus, pivots therewith about pivot axis XP. A separate encoder 360 including one or more magnetic sensors 362 may be fixed to frame 104 (e.g., at support arm 310) apart from caster connector 312. The encoder 360 and magnetic sensor(s) 362 may detect variations in the detectable magnetic field or flux and thereby determine the relative position of detectable magnet 364, as would be understood in light of the present disclosure. For instance, variations in magnetic flux may permit a pole line (PL) of the magnet 364 to be detected relative to a calibrated reference line (RL) of the magnetic sensor 362. Optionally, four discrete magnetic sensors may detect the magnetic flux coming from a diametrically magnetized magnet. As illustrated between FIGS. 15 and 16, the relative angular distance (0) between the RL and PL may be detected to determine the directional angle.

Generally, magnetic field or flux between detectable magnet 364 and the magnetic sensor(s) 362 varies with the directional angle of caster connector 312. For instance, turning especially to FIGS. 3 and 4 as well as FIGS. 24 and 27, the encoder 360 may be disposed coaxially with the detectable magnet 364. Both detectable magnet 364 and encoder 360 may be disposed along pivot axis XP. Additionally or alternatively, the encoder 360 may be disposed above (e.g., directly above) detectable magnet 364. In some embodiments, detectable magnet 364 comprises a diametrically magnetized disc magnet that is fixed (e.g., by one or more mechanical fasteners, welds, or adhesives) to pivot rod 316. Optionally, detectable magnet 364 may be disposed on a top end of caster connector 312 (e.g., on or across pivot axis XP). For instance, a rod cap 376 may be fixed to pivot rod 316 (e.g., via a complementary friction fit, clip, adhesive, or fastener) at a top end thereof above the lower end of support arm 310 (e.g., within gear cavity 346). Detectable magnet 364 may be embedded within or otherwise affixed to rod cap 376 (e.g., to rotate therewith) at a position coaxial with pivot axis XP. The encoder 360 may be disposed on or across pivot axis XP. Additionally or alternatively, the encoder 360 may include multiple circumferentially spaced apart magnetic sensors 362 (e.g., disposed about pivot axis XP) fixed on support arm 310 (e.g., at upper end 340). As detectable magnet 364 pivots with caster connector 312, the encoder 360 and magnetic sensors 362 may remain relatively fixed to support arm 310.

As will be appreciated, a magnet other than a diametrically magnetized magnet shown above may be used, so long as it is configured to generate a changing magnetic field as it rotates with the caster connector (e.g., caster connector 312). For example, a different configuration of a diametrically magnetized magnet (e.g., multiple poles, one pole with different diameters and directions, multiple poles with different diameters and directions) may be used or an axially or radial magnetized magnet (e.g., having single or multiple poles or unipolar).

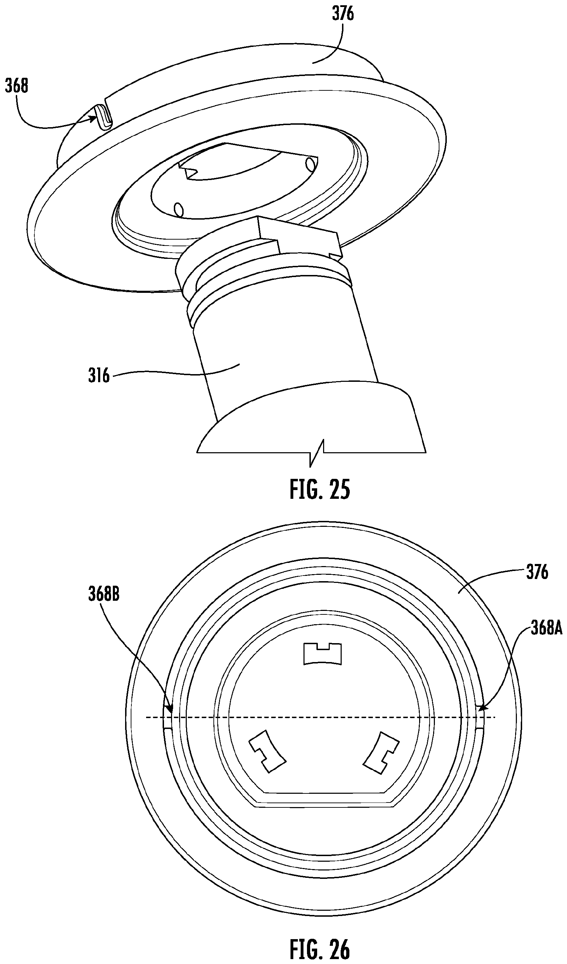

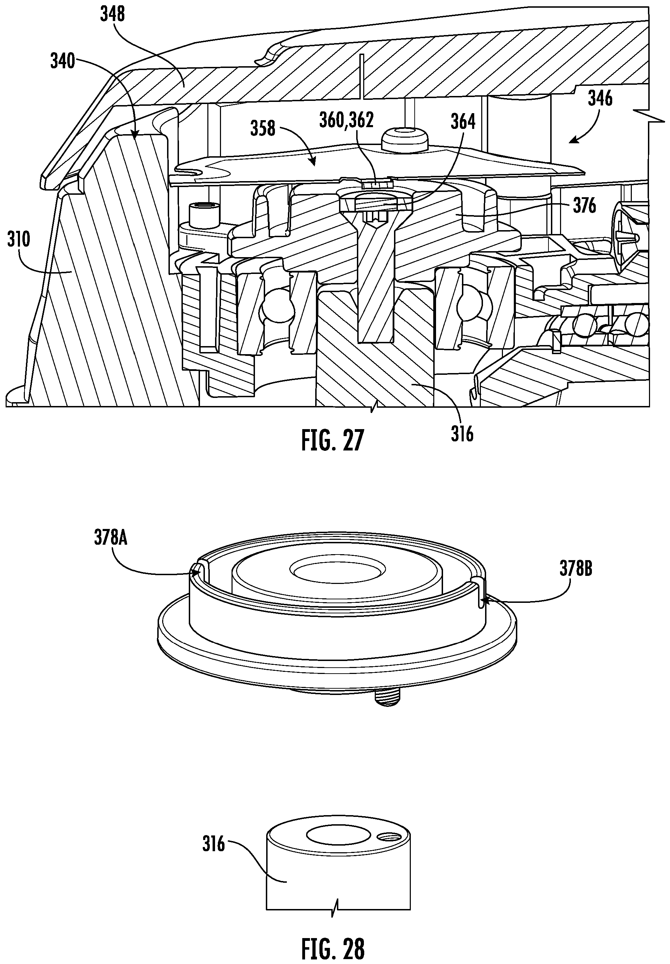

Optionally, the rod cap 376 may be keyed to pivot rod 316 to maintain a consistent or predefined orientation (e.g., about pivot axis XP) of rod cap 376 relative to pivot rod 316. For instance, both rod cap 376 and pivot rod 316 may each define a complementary, non-circular profile in a plane perpendicular to pivot axis XP). As an example, a negative and positive D-shape profile may be provided between rod cap 376 and a top end of pivot rod 316, respectively (as illustrated at FIG. 25). Additionally or alternatively, rod cap 376 and pivot rod 316 may be mechanically keyed via a radially offset and axially extending alignment pin may be provided (e.g., on one of rod cap 376 and pivot rod 316) that is received in a complementary recess (e.g., defined on the other of rod cap 376 and pivot rod 316) (as illustrated at FIG. 28).

Turning especially to FIGS. 5 through 10, the encoder 360 may be disposed radially offset from the detectable magnet 364. The encoder 360 may thus be radially spaced apart from the detectable magnet 364 relative to the pivot axis XP. Optionally, the detectable magnet 364 may be disposed along pivot axis XP or about pivot axis XP (e.g., as a toroidal ring encircling pivot axis XP. Additionally or alternatively, the encoder 360 may be disposed beside or adjacent to detectable magnet 364. Optionally, encoder 360 may be coplanar with (e.g., vertically aligned with or disposed at the same height as) detectable magnet 364. Additionally or alternatively, the encoder 360 may include one or more magnetic sensors 362. If multiple magnetic sensors 362 are provided, such magnetic sensors 362 may be circumferentially spaced apart from each outer (e.g., disposed about pivot axis XP). Encoder 360, and any corresponding magnetic sensors 362, may be fixed on support arm 310 (e.g., at upper end 340). As detectable magnet 364 pivots with caster connector 312, the encoder 360 and magnetic sensors 362 may remain relatively fixed to support arm 310.

Returning again generally to FIGS. 2 through 11, as well as FIGS. 23 through 28, separate from or in addition to the angle or position sensor 358, SWA 300 may include a reference (e.g., second) sensor 366 configured to detect a set reference point 368 (e.g., one or more set reference points 368) that is movable relative the reference sensor 366. For instance, the reference sensor 366 may be configured to detect the set reference point 368 at a predetermined pivoting position (e.g., directional angle) about the pivot axis XP. The reference sensor 366 may be fixed to the frame 104 (e.g., at the support arm 310) above, at least, the steerable wheel 314. In some embodiments, the reference sensor 366 is spaced apart from the angle sensor 358. As an example, the reference sensor 366 may be disposed below the angle sensor 358, such as at the lower end 342 of support arm 310. As an additional or alternative example, the reference sensor 366 may be disposed above angle sensor 358 or radially spaced apart in the same plane.

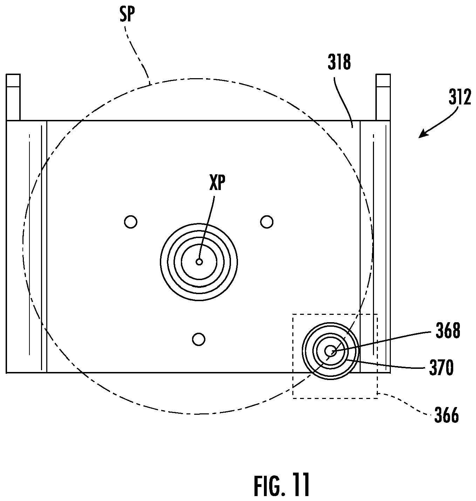

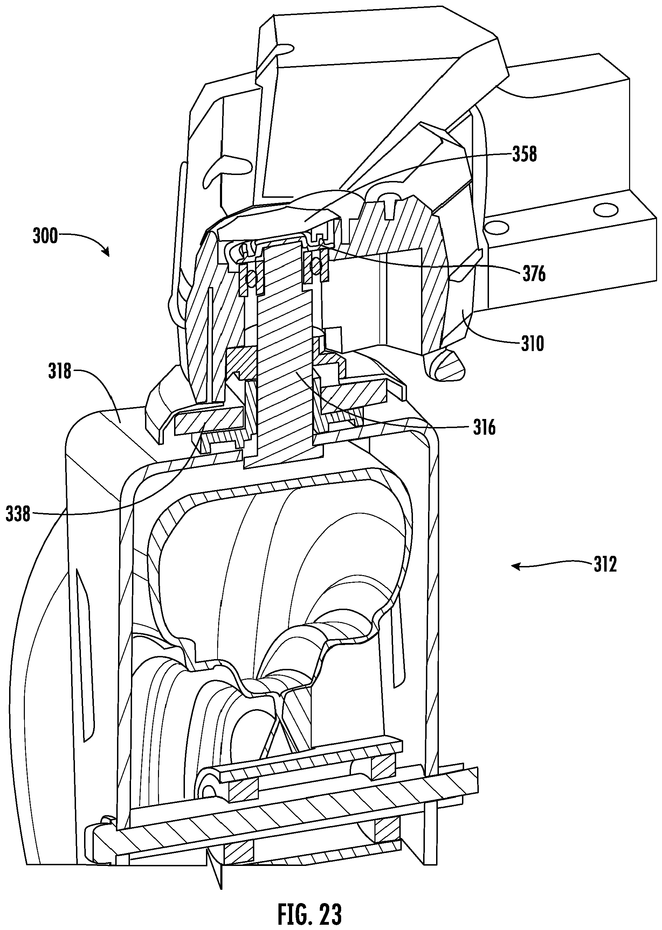

The set reference point 368 may be defined, for instance, by the caster connector 312 (e.g., including one or more features fixed thereto-such as to rotate with caster connector 312). In certain embodiments, such as those illustrated in FIG. 11, the set reference point 368 is defined in particular on the assembly bracket 318 and is rotatable along a set path SP about pivot axis XP (e.g., below the reference sensor 366). In additional or alternative embodiments, such as those illustrated in FIGS. 23 through 28, the set reference point or points 368 may be defined on rod cap 376 (e.g., radially outward from pivot axis XP) and is/are rotatable along a set path about pivot axis XP (e.g., below or radially inward from at least a portion of the reference sensor 366). Optionally, multiple discrete reference points 368 may be defined. For instance, a first reference point 368A and a second reference point 368B may be defined at a common radial distance while being circumferentially offset or spaced apart. In some such embodiments, the second reference point 368B is offset by 180° (e.g., about the pivot axis XP) from the first reference point 368A.

In some embodiments, the set reference point 368 includes a non-wired fiducial marker 370 (e.g., permanent magnet, embossing, relief, visual icon, etc.) that is fixed relative to the caster connector 312. Thus, no active power or electricity may be needed at the non-wired fiducial marker 370. The reference sensor 366, by contrast, may include or be provided as any suitable actively powered element to detect an instance in which the non-wired fiducial marker 370 is aligned with or disposed at the set pivoting position, such as a Hall effect sensor or reed switch. In some embodiments, the location of the reference point 368 and reference sensor 366 may be swapped (i.e., the reference point 368 may be positioned fixedly on the frame and the reference sensor 366 positioned on the caster connector 312).

In the illustrated embodiments of FIGS. 23 through 28, the reference point(s) 368 is/are defined as a gap (e.g., a first gap for the first reference point 368A or a second gap 368B) extending through the rod cap 376. For instance, such gap(s) may extend radially through an elevated rim of rod cap 376. As shown, a vertical recess or notch may be formed at each gap. Moreover, the gap(s) may be offset from the pivot axis XP (disposed radially outward therefrom). In some such embodiments, the reference sensor 366 is provided as or includes an optical sensor (e.g., photogate) directed at the rod cap 376 (e.g., the elevated rim thereof). In turn, the reference sensor 366 may be selectively aligned with a gap or reference point 368 at a corresponding fixed alignment position (e.g., set pivoting position) of the caster connector 312. For instance, the reference sensor 366 (e.g., optical sensor or photogate) may be selectively aligned with the first gap at a fixed alignment position of the caster connector 312. Additionally or alternatively, the reference sensor 366 (e.g., optical sensor or photogate) may be selectively aligned with the second gap at a second fixed alignment position (e.g., offset from the first alignment position) of the caster connector 312. In some embodiments, the first and second reference points 368A, 368B (e.g., gaps thereof) are spaced apart by 180° about the pivot axis XP. Notably, a controller or SWA 300 may thus adjust the shortest possible distance (e.g., to correct alignment of caster connector 312 about pivot axis XP).

In contrast to the angle sensor 358, the reference sensor 366 may only be configured to detect or confirm that a set pivoting position or directional angle is achieved (e.g., at given moment). Thus, reference sensor 366 may provide a binary indication (e.g., via one or more reference signals) of achievement of the set pivoting position (i.e., whether or not the caster connector 312 is in the set pivoting position). The reference sensor 366 may be in operable communication with controller 302 and, thus, the reference signal(s) corresponding to the binary indication of the set pivoting position may be provided to the controller 302 during use.

As an example, the position of the reference sensor 366 and non-wired fiducial marker 370 may be such that the reference sensor 366 is directly above the non-wired fiducial marker 370 only when the steerable wheel 314 is in a straight and forward position (e.g., at an angle of 0° relative to the pivot axis XP or transverse direction T).

Optionally, the achievement of the set pivoting position may be used to adjust or calibrate a determined position of the angle sensor 358, as will be described below. Such adjustments or calibrations may be made either prior to use (e.g., during assembly of SWA 300) or subsequent to use of SWA 300. As an example, during initial calibration, the angle sensor 358 may detect an initial position value for a determined steering angle before caster connector 312 (including pivot rod 316 and cap 376) is rotated (e.g., as motivated by assembly controller 394) until reference sensor 366 detects a reference point 368 or fiducial marker 370 (e.g., indicating the set pivoting position). In turn, a new calibrated position value may be detected at the angle sensor 358 while the caster connector 312 is in the set pivoting position to use as reference or set calibration for subsequent rotation and detection of position values at the reference sensor 358. As an additional or alternative example, during adjustments to the calibration subsequent to use, the reference sensor 366 may detect a reference point 368 or fiducial marker 370. A current position value (e.g., current steering angle) may then be detected at the angle sensor 358. The current position value or steering may be compared to a set directional angle for the set pivoting position. Contrasts between the current steering angle and set directional angle (e.g., between the positions detected at the reference sensor 366 and angle sensor 358) may prompt a reference or set calibration for the set pivoting position at the angle sensor 358 to be revised (e.g., automatically or via a new initial calibration process).

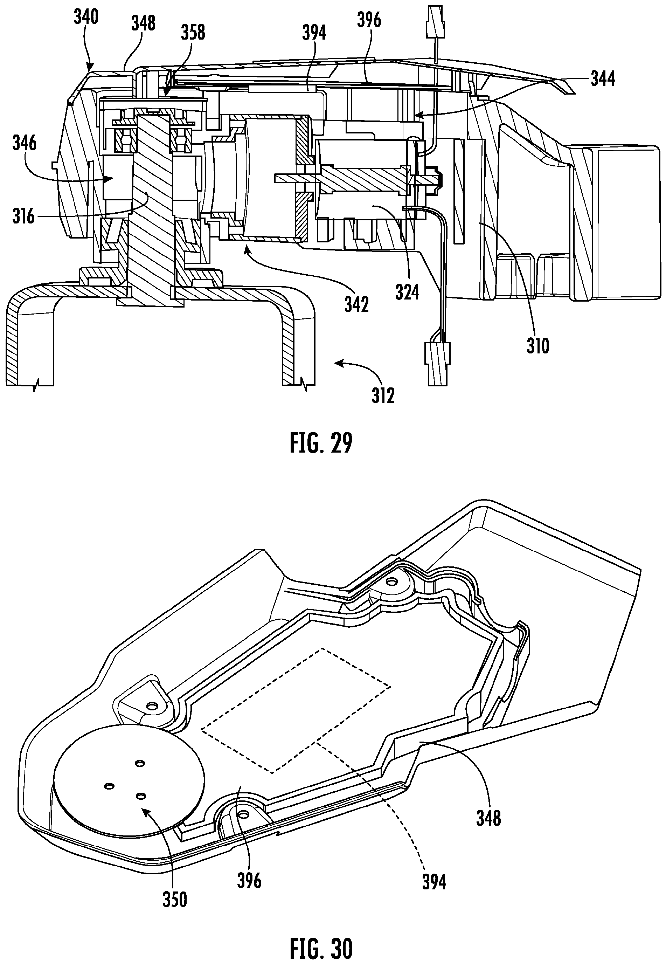

Turning now to FIGS. 29 and 30, SWA 300 may include a discrete assembly controller 394 (e.g., separate from or in addition to controller 302-FIG. 1). The assembly controller 394 may be in electrical communication with one or more portions of SWA 300; such as assembly motor 324, joint motor (FIGS. 13 and 14), angle sensor 358, or reference sensor 366. Moreover, assembly controller 394 may be configured, for instance, to direct rotation of caster connector 312. Optionally, assembly controller 394 may be in operable (e.g., electrical or wireless) communication with controller 302 or one or more portions of user interface 242 (FIG. 1), generally. In turn, assembly controller 394 may be operable to control pivoting or rotation of caster connector 312 based, at least in part, on one or more signals received from controller 302 or user interface 242 (e.g., directly or indirectly, such as via controller 302).

Assembly controller 394 may include one or more printed circuit boards (PCB) 396. When assembled, assembly controller 394 may generally be provided at a suitable location of frame 104 (e.g., proximal to SWA 300 or at a forward portion of frame 104, which may be in front of seat 102-FIG. 1). As an example, assembly controller 394, including PCB 396 may be mounted on or within support arm 310 (e.g., at upper end 340). In the illustrated embodiments, assembly controller 394 is disposed within the support arm 310 (e.g., above assembly motor 324 or caster connector 312). As shown, assembly controller 394 may be supported on or beneath guard cap 348, notably permitting direct access to assembly controller 394 (e.g., during service or assembly processes) or mitigating wiring throughout SWA 300. Guard cap 348, or a portion thereof, may include one or more conductive heatsink surfaces (e.g., configured to notably draw heat from assembly controller 394 or one or more sensors during use). Optionally, assembly controller 394 may be potted onto guard cap 348, permitting simultaneous movement or installation of such features, as would be understood in light of the present disclosure.

Now that the construction of a tool device (e.g., lawnmower 100) according to exemplary embodiments have been presented, exemplary methods (e.g., method 1200) of operating a tool device will be described, such as in the context of a device operation. Although the above discussion is primarily directed to the details of a riding lawnmower 100, one skilled in the art will appreciate that the exemplary method 1200 is applicable to the operation of a variety of other devices or power tools. In exemplary embodiments, the various method steps as disclosed herein may be performed (e.g., in whole or part) by controller 302 or assembly controller 394.

FIG. 12 depicts steps performed in a particular order for purpose of illustration and discussion. Those of ordinary skill in the art, using the disclosures provided herein and except as otherwise indicated, will understand that the steps of the method 1200 can be modified, adapted, rearranged, omitted, interchanged, or expanded in various ways without deviating from the scope of the present disclosure.

Advantageously, methods in accordance with the present disclosure may accurately or consistently position one or more steerable-wheel assemblies in accordance with an operator's instructions (e.g., provided at user input).

At 1210, the method 1200 includes receiving a steering input signal from the steering device. Generally, the steering input signal may be output by a user or steering input (e.g., as described above). For instance, one or more signals may be output (e.g., to the controller) based on a relative position or movement of the steering input (e.g., distance from a static home position). In the case of a joystick, the signal may be based on or correspond to a displacement distance along the pitch axis, yaw axis, or roll axis (e.g., as would be understood). For instance, one or more sensors (e.g., accelerator, gyroscope, Hall effect sensor, potentiometer, etc.) may be provided on or in engagement with the joystick to detect the location or movement of the joystick along the pitch axis, yaw axis, or roll axis.

Once the steering input is received, one or more movement outputs may be transmitted (e.g., to the drive motor(s) or assembly motor(s) as corresponding data signals or voltages). For instance, one or more signals corresponding to a requested velocity or directional angle may be output (e.g., to the motors). As an example, one or more velocity movement outputs may be transmitted to the drive motors (e.g., based on or to achieve a requested turn angle or overall mower speed). The velocity movement output may be, for instance, correlated to the steering input (e.g., according to a predetermined look-up table, chart, graph, or formula). Moreover, velocity movement outputs may instruct or force the drive motors to rotate (e.g., at the requested velocity). As an additional or alternative example, one or more positional movement outputs may be transmitted to the assembly motors (e.g., based on or to achieve a requested turn angle). The positional movement outputs may be, for instance, correlated to the steering input (e.g., according to a predetermined look-up table, chart, graph, or formula). Moreover, positional movement outputs may instruct or force the assembly motor(s) to rotate (e.g., to the requested directional angle based on a set calibration). As described above, discrete assembly motors may be provided for each steerable wheel or, alternatively, a single joint assembly motor may be provided for multiple different steerable wheels. In turn, multiple positional movement outputs may be provided (e.g., each corresponding to and being sent to a discrete assembly motor) or, alternatively, a joint positional movement output may be provided (e.g., to a joint assembly motor).

At 1220, the method 1200 includes detecting a drive wheel velocity (e.g., rotational velocity at one or both of the drive wheels). Such a detection may include, for instance, reading the velocity movement output. In other words, the detection may include determining the rotational velocities at which the drive wheels are being rotated. Additionally or alternatively, such a detection may include, for instance, receiving one or more detection signals from a sensor, circuit, or motor configured to detect a contemporaneous output condition at the drive wheels (e.g., as would be understood). In other words, the detection may include determining the actual or measured rotational velocities to which the drive wheels are being directed.

At 1230, the method 1200 includes determining a target steering angle. In particular, the determination may include reading the positional movement output. For instance, 1230 may include determining the directional angle to which the steerable wheels are being held or moved. The target for the steerable wheels to achieve a certain turn angle or direction of the overall lawnmower may thus be determined.

In optional embodiments, the method 1200 includes the step 1242 of receiving a reference input. In particular, a reference input may be received such as from a reference sensor, as described above. In some such embodiments, the reference signal is received in response to detecting a set reference point (e.g., at the reference sensor). For instance, rotation of the assembly bracket (and thereby the set reference point) may cause the set reference point to align with the frame-static reference sensor. The alignment may correspond to a set directional angle. Thus, detection of the set reference point may indicate that the steerable wheel is at the set directional angle (e.g., irrespective of any target steering angle or movement output).

Following or immediately prior to 1242, the method 1200 may further optionally include the step 1244 of determining a current steering angle. In particular, the determination of 1244 may be based on one or more signals detected at or received from the angle sensor. For instance, 1244 may include receiving a position signal from the encoder (e.g., one or more angle sensors), and determining an angle reading based on the position signal. Thus, 1244 may include determining the steering angle (e.g., directional angle) at which the angle sensor(s) detects the steerable wheel (e.g., irrespective of the reference sensor or signal).

At 1240, the method 1200 further optionally includes calibrating steering output for the SWA. Calibration may occur, for instance, subsequent or prior to 1242 or 1244. In some embodiments, 1240 includes comparing the determined current steering angle to the set directional angle (e.g., at which the steerable wheel has been detected at 1242). If a contrast (e.g., exceeding a predetermined threshold value or percentage) is detected between the determined current steering angle and the set directional angle, the current steering angle (or relative detectable positions of the SWA about the pivot axis) may be adjusted. In other words, 1240 may include adjusting the determined angle reading based on receiving the reference signal. For instance, the current steering angle may be revised to the set steering angle. If no contrast (i.e., a contrast absence) is detected, the determined current steering angle may be maintained as the current steering angle. In other words, the determined current steering angle may be unchanged if the determined current steering angle matches the set directional angle (e.g., within the predetermined threshold value or percentage).

At 1250, the method 1200 includes directing the steerable wheel according to the target steering angle (e.g., of 1230). Such a directing may, thus, be based on the received steering input signal and position signal. The directing of the steerable wheel may be performed, for instance, via the assembly motor (e.g., as described above). In instances in which the current steering angle does not match the set directional output, 1250 may include directing the assembly motor to pivot the caster connector (e.g., based on the received steering input signal and position signal). As would be understood, that different SWAs may have different directional outputs (e.g., desired angles).

As would be understood in light of the present disclosure, directing the steerable wheel may account for corrective adjustments (e.g., even when the steering input or target steering angle is unchanged). Such adjustments may provide, for example, a feedback loop to adjust or pivot the caster connector in instances where the determined angle reading does not match the current steering angle (i.e., in response to a detected error). For instance, proportional-integral-derivative (PID) control loop may be employed. In some such embodiments, the PID uses the detected error and pre-tuned Kₚ, Kᵢ, and K_{d} terms to generate a feedback output for directing the steerable wheel. This feedback output may then be used to activate the assembly motor and pivot the steerable wheel until it reaches the target steering angle.

In some embodiments, 1250 includes pivoting (e.g., by initiating rotation of) a steerable-wheel assembly's caster connector (e.g., to achieve a selected output position, turn angle, or directional angle). For instance, 1250 may include determining an output position of the caster connector, which may itself be based on 1230 or 1240. It may be further determined that the output position differs from the current steering angle.

A pivoting direction to the output position may be determined (e.g., in order to achieve the determined output position). Thus, the pivoting direction may be based on the received position signal and determined output position. Moreover, 1250 may include initiating rotation of the caster connector in the determined direction to the output position. In some such embodiments, an equivalent angle is calculated using a modulo based on the determined output position (e.g., directional angle thereof). The equivalent angle may be equal to 180 degrees (e.g., about the pivot axis) from the directional angle of the determined output position. Subsequently, separate angular distances may be calculated for both the directional angle of the determined output position and its equivalent angle. The smallest angular distance between the two may be determined. Thus, a minimum distance direction between the directional angle of the determined output position and its equivalent angle may be direction. The pivoting direction may then be selected as the minimum distance direction, thereby causing the steerable wheel to pivot to the output position across the minimum distance.

Embodiment 1. A tool device comprising: a frame; a walking element coupled to the frame; a drive motor selectively powering the walking element; and a steerable-wheel assembly (SWA) attached to the frame apart from the walking element, the SWA comprising a caster connector pivotably mounted to the frame to rotate about a pivot axis, a steerable wheel rotatably coupled to the caster connector, a detectable magnet fixed to the caster connector to pivot therewith about the pivot axis, and an encoder comprising a magnetic sensor fixed to the frame apart from the caster connector to detect a pivotable position of the detectable magnet.

Embodiment 2. The tool device of any one or more of the embodiments, wherein the SWA further comprises an assembly motor radially offset from the caster connector relative to the pivot axis and mechanically coupled to the caster connector to pivot the caster connector about the pivot axis.

Embodiment 3. The tool device of any one or more of the embodiments, wherein the SWA further comprises an assembly motor fixed to the frame, and a gear train mechanically coupling the assembly motor with the caster connector to pivot the caster connector about the pivot axis.

Embodiment 4. The tool device of any one or more of the embodiments, wherein the gear train comprises a planetary gear set parallel to the pivot axis.

Embodiment 5. The tool device of any one or more of the embodiments, wherein the encoder is disposed coaxially with the detectable magnet.

Embodiment 6. The tool device of any one or more of the embodiments, wherein the encoder is disposed directly above the detectable magnet along the pivot axis.

Embodiment 7. The tool device of any one or more of the embodiments, wherein the encoder is radially offset from the detectable magnet relative to the pivot axis.

Embodiment 8. The tool device of any one or more of the embodiments, the encoder is vertically aligned with the detectable magnet relative to the pivot axis.

Embodiment 9. The tool device of any one or more of the embodiments, wherein the SWA is a first SWA, wherein the pivot axis is a first pivot axis, and wherein the tool device further comprises a second SWA attached to the frame apart from the walking element and the first SWA, the second SWA comprising a caster connector pivotably mounted to the frame to rotate about a second pivot axis, a steerable wheel rotatably coupled to the caster connector of the second SWA, a detectable magnet fixed to the caster connector of the second SWA to pivot therewith about the second pivot axis, and an encoder comprising a magnetic sensor fixed to the frame apart from the caster connector of the second SWA to detect a pivotable position of the detectable magnet of the second SWA.

Embodiment 10. A lawnmower comprising: a frame; a steering device attached to the frame; a walking element coupled to the frame; a drive motor selectively powering the walking element; a steerable-wheel assembly (SWA) attached to the frame apart from the walking element, the SWA comprising a caster connector pivotably mounted to the frame to rotate about a pivot axis, a steerable wheel rotatably coupled to the caster connector, an assembly motor mechanically coupled to the caster connector to pivot the caster connector about the pivot axis, a detectable magnet fixed to the caster connector to pivot therewith about the pivot axis, and an encoder comprising a magnetic sensor fixed to the frame apart from the caster connector to detect a pivotable position of the detectable magnet; and one or more controllers attached to the frame in operable communication with the steering device, the drive motor, and the assembly motor, the one or more controllers being collectively configured to receive a steering input signal from the steering device, receive a position signal from the encoder, and direct the assembly motor to pivot the caster connector based on the received steering input signal and position signal.

Embodiment 11. The lawnmower of any one or more of the embodiments, wherein the SWA further comprises an assembly motor radially offset from the caster connector relative to the pivot axis and mechanically coupled to the caster connector to pivot the caster connector about the pivot axis.

Embodiment 12. The lawnmower of any one or more of the embodiments, wherein the SWA further comprises an assembly motor fixed to the frame, and a gear train mechanically coupling the assembly motor with the caster connector to pivot the caster connector about the pivot axis.

Embodiment 13. The lawnmower of any one or more of the embodiments, wherein the gear train comprises a planetary gear set parallel to the pivot axis.

Embodiment 14. The lawnmower of any one or more of the embodiments, wherein the encoder is disposed coaxially with the detectable magnet.

Embodiment 15. The lawnmower of any one or more of the embodiments, wherein the encoder is disposed directly above the detectable magnet along the pivot axis.

Embodiment 16. The lawnmower of any one or more of the embodiments, wherein the encoder is radially offset from the detectable magnet relative to the pivot axis.

Embodiment 17. The lawnmower of any one or more of the embodiments, wherein the encoder is vertically aligned with the detectable magnet relative to the pivot axis.

Embodiment 18. The lawnmower of any one or more of the embodiments, wherein the SWA is a first SWA, wherein the pivot axis is a first pivot axis, and wherein the lawnmower further comprises a second SWA attached to the frame apart from the walking element and the first SWA, the second SWA comprising a caster connector pivotably mounted to the frame to rotate about a second pivot axis, a steerable wheel rotatably coupled to the caster connector of the second SWA, a detectable magnet fixed to the caster connector of the second SWA to pivot therewith about the second pivot axis, and an encoder comprising a magnetic sensor fixed to the frame apart from the caster connector of the second SWA to detect a pivotable position of the detectable magnet of the second SWA.

Embodiment 19. A tool device comprising: a frame comprising a support arm; a walking element coupled to the frame; a drive motor selectively powering the walking element; and a steerable-wheel assembly (SWA) attached to the frame apart from the walking element, the SWA comprising a caster connector pivotably mounted to the frame at the support arm to rotate about a pivot axis, a steerable wheel rotatably coupled to the caster connector, an assembly motor mechanically coupled to the caster connector to pivot the caster connector about the pivot axis, a primary drive gear disposed at an upper end of the support arm opposite a lower end of the support arm, the primary drive gear being in mechanical communication with the assembly motor to be rotated thereby, a primary driven gear mechanically coupled to the primary driven gear, and a secondary driven gear disposed on the caster connector in mechanical communication with the primary driven gear to direct rotation of the steerable wheel.

Embodiment 20. The tool device of any one or more of the embodiments, further comprising a secondary drive gear mechanically coupled to the primary driven gear apart from the primary drive gear.

Embodiment 21. The tool device of any one or more of the embodiments, wherein the secondary drive gear is disposed at a lower end of the support arm.

Embodiment 22. The tool device of any one or more of the embodiments, further comprising a reduction gear set mechanically coupling the primary driven gear to the secondary drive gear.

Embodiment 23. The tool device of any one or more of the embodiments, wherein the reduction gear set comprises a planetary gear set.

Embodiment 24. The tool device of any one or more of the embodiments, wherein the secondary drive gear is mounted coaxially with the primary driven gear.

Embodiment 25. The tool device of any one or more of the embodiments, wherein the SWA further comprises a detectable magnet fixed to the caster connector to pivot therewith about the pivot axis.

Embodiment 26. The tool device of any one or more of the embodiments, wherein the SWA further comprises an encoder comprising a magnetic sensor fixed to the frame apart from the caster connector to detect a pivotable position of the detectable magnet.

Embodiment 27. The tool device of any one or more of the embodiments, wherein the secondary drive gear defines a reference diameter (SERD), wherein the secondary driven gear defines a reference diameter (SNRD), and wherein the SERD is less than the SNRD.

Embodiment 28. The tool device of any one or more of the embodiments, wherein the primary drive gear defines a reference diameter (PERD), wherein the primary driven gear defines a reference diameter (PNRD), and wherein the PERD is less than the PNRD.

Embodiment 29. The tool device of claim 19, wherein the assembly motor is radially offset from the caster connector relative to the pivot axis.

Embodiment 30. A tool device comprising: a frame comprising a support arm; a walking element coupled to the frame; a drive motor selectively powering the walking element; and a steerable-wheel assembly (SWA) attached to the frame apart from the walking element, the SWA comprising a caster connector pivotably mounted to the frame at the support arm to rotate about a pivot axis, a steerable wheel rotatably coupled to the caster connector, an assembly motor mechanically coupled to the caster connector to pivot the caster connector about the pivot axis, the assembly motor being radially offset from the caster connector relative to the pivot axis, a primary drive gear disposed at an upper end of the support arm opposite a lower end of the support arm, the primary drive gear being in mechanical communication with the assembly motor to be rotated thereby, a primary driven gear mechanically coupled to the primary driven gear, a secondary drive gear mechanically coupled to the primary driven gear apart from the primary drive gear, a secondary driven gear disposed on the caster connector in mechanical communication with the secondary drive gear to direct rotation of the steerable wheel, and a detectable magnet fixed to the caster connector above the secondary driven gear to pivot with the caster connector about the pivot axis.

Embodiment 31. The tool device of any one or more of the embodiments, wherein a secondary drive gear mechanically coupled to the primary driven gear apart from the primary drive gear.

Embodiment 32. The tool device of any one or more of the embodiments, wherein the secondary drive gear is disposed at a lower end of the support arm.

Embodiment 33. The tool device of any one or more of the embodiments, wherein further comprising a reduction gear set mechanically coupling the primary driven gear to the secondary drive gear.

Embodiment 34. The tool device of any one or more of the embodiments, wherein the reduction gear set comprises a planetary gear set.

Embodiment 35. The tool device of any one or more of the embodiments, wherein the secondary drive gear is mounted coaxially with the primary driven gear.

Embodiment 36. The tool device of claim 31, wherein the SWA further comprises an encoder comprising a magnetic sensor fixed to the frame apart from the caster connector to detect a pivotable position of the detectable magnet.

Embodiment 37. The tool device of any one or more of the embodiments, wherein the secondary drive gear defines a reference diameter (SERD), wherein the secondary driven gear defines a reference diameter (SNRD), and wherein the SERD is less than the SNRD.

Embodiment 38. The tool device of any one or more of the embodiments, wherein the primary drive gear defines a reference diameter (PERD), wherein the primary driven gear defines a reference diameter (PNRD), and wherein the PERD is less than the PNRD.

Embodiment 39. The tool device of any one or more of the embodiments, wherein the assembly motor is radially offset from the caster connector relative to the pivot axis.

Embodiment 40. A tool device comprising: a frame comprising a support arm; a walking element coupled to the frame; a drive motor selectively powering the walking element; a steerable-wheel assembly (SWA) attached to the frame apart from the walking element, the SWA comprising a caster connector pivotably mounted to the frame to rotate about a pivot axis, the caster connector defining a set reference point radially offset from the pivot axis, a steerable wheel rotatably coupled to the caster connector, a first sensor configured to detect a pivotable position of the caster connector, a second sensor configured to detect the set reference point; and a one or more controllers attached to the frame in operable communication with the first sensor and the second sensor, the one or more controllers being collectively configured to receive a position signal from the first sensor, determine an angle reading based on the position signal, receive a reference signal from the second sensor indicating detection of the set reference point, and adjust the determined angle reading based on the received reference signal.

Embodiment 41. The tool device of any one or more of the embodiments, wherein the second sensor is fixed to the frame above the steerable wheel.

Embodiment 42. The tool device of any one or more of the embodiments, wherein the set reference point comprises a non-wired fiducial marker fixed to the caster connector.

Embodiment 43. The tool device of any one or more of the embodiments, wherein the second sensor comprises a Hall effect sensor, photogate, or reed switch.

Embodiment 44. The tool device of any one or more of the embodiments, wherein the SWA further comprises a detectable magnet fixed to the caster connector to pivot therewith about the pivot axis, and wherein the first sensor comprises an encoder comprising a magnetic sensor fixed to the frame apart from the caster connector to detect a pivotable position of the detectable magnet.

Embodiment 45. The tool device of any one or more of the embodiments, wherein further comprising a drive motor selectively powering the walking element positioned rearward from the SWA.

Embodiment 46. The tool device of any one or more of the embodiments, wherein the SWA further comprises an assembly motor mechanically coupled to the caster connector to pivot the caster connector about the pivot axis, wherein the tool device further comprises a steering device attached to the frame; wherein the one or more controllers are further collectively configured to receive a steering input signal from the steering device, receive a position signal from the first sensor, and direct the assembly motor to pivot the caster connector based on the received steering input signal and position signal, wherein direct the assembly motor comprises determine an output position of the caster connector, and determine a pivoting direction to the output position based on the position signal.

Embodiment 47. The tool device of any one or more of the embodiments, wherein the SWA further comprises a gear train mechanically coupling the assembly motor with the caster connector to pivot the caster connector about the pivot axis.

Embodiment 48. The tool device of any one or more of the embodiments, wherein the SWA is a first SWA, wherein the pivot axis is a first pivot axis, and wherein the tool device further comprises a second SWA attached to the frame apart from the walking element and the first SWA, the second SWA comprising a caster connector pivotably mounted to the frame to rotate about a second pivot axis, the caster connector defining a set reference point radially offset from the second pivot axis, a steerable wheel rotatably coupled to the caster connector of the second SWA, an first sensor configured to detect a pivotable position of the caster connector of the second SWA, and a second sensor configured to detect the set reference point of the second SWA.

Embodiment 48. A lawnmower comprising: a frame comprising a support arm; a steering device attached to the frame; a walking element coupled to the frame; a drive motor selectively powering the walking element; a steerable-wheel assembly (SWA) attached to the support arm apart from the walking element, the SWA comprising a caster connector pivotably mounted to the frame to rotate about a pivot axis, the caster connector defining a set reference point radially offset from the pivot axis, a steerable wheel rotatably coupled to the caster connector, a first sensor configured to detect a pivotable position of the caster connector, a second sensor configured to detect the set reference point; and one or more controllers attached to the frame in operable communication with the first sensor and the second sensor, the one or more controllers being collectively configured to receive a position signal from the first sensor, determine an angle reading based on the position signal, receive a reference signal from the second sensor indicating detection of the set reference point, and adjust the determined angle reading based on the received reference signal.

Embodiment 50. The lawnmower of any one or more of the embodiments, wherein the second sensor is fixed to the frame above the steerable wheel.

Embodiment 51. The lawnmower of any one or more of the embodiments, wherein the set reference point comprises a non-wired fiducial marker fixed to the caster connector.

Embodiment 52. The lawnmower of any one or more of the embodiments, wherein the second sensor comprises a Hall effect sensor, photogate, or reed switch.

Embodiment 53. The lawnmower of any one or more of the embodiments, wherein the SWA further comprises a detectable magnet fixed to the caster connector to pivot therewith about the pivot axis, and wherein the first sensor comprises an encoder comprising a magnetic sensor fixed to the frame apart from the caster connector to detect a pivotable position of the detectable magnet.

Embodiment 54. The lawnmower of any one or more of the embodiments, further comprising a drive motor selectively powering the walking element positioned rearward from the SWA.

Embodiment 55. The lawnmower of any one or more of the embodiments, wherein the SWA further comprises an assembly motor mechanically coupled to the caster connector to pivot the caster connector about the pivot axis, wherein the one or more controllers are collectively configured to receive a steering input signal from the steering device, receive a position signal from the first sensor, and direct the assembly motor to pivot the caster connector based on the received steering input signal and position signal, wherein direct the assembly motor comprises determine an output position of the caster connector, and determine a pivoting direction to the output position based on the position signal.

Embodiment 56. The tool device of any one or more of the embodiments, wherein the SWA further comprises a gear train mechanically coupling the assembly motor with the caster connector to pivot the caster connector about the pivot axis, the gear train being parallel to the pivot axis.

Embodiment 57. The lawnmower of any one or more of the embodiments, wherein the SWA is a first SWA, wherein the pivot axis is a first pivot axis, and wherein the lawnmower further comprises a second SWA attached to the frame apart from the walking element and the first SWA, the second SWA comprising a caster connector pivotably mounted to the frame to rotate about a second pivot axis, the caster connector defining a set reference point radially offset from the second pivot axis, a steerable wheel rotatably coupled to the caster connector of the second SWA, an first sensor configured to detect a pivotable position of the caster connector of the second SWA, and a second sensor configured to detect the set reference point of the second SWA.

Embodiment 58. The tool device of any one or more of the embodiments, wherein the caster connector comprises a pivot rod extending along the pivot axis, and a rod flange fixed to the pivot rod and disposed below at least a portion of the frame, the rod flange extending radially from the pivot rod, and wherein the SWA further comprises an assembly bracket fixed to the rod flange, the steerable wheel being rotatably supported on the assembly bracket.

Embodiment 59. The tool device of any one or more of the embodiments, wherein the rod flange defines three or more mounting points over the assembly bracket, the three or more mounting points being circumferentially spaced at two or more angles about the pivot axis.

Embodiment 60. A tool device comprising: a frame comprising a support arm; a walking element coupled to the frame; a drive motor selectively powering the walking element; and a steerable-wheel assembly (SWA) attached to the frame apart from the walking element, the SWA comprising a caster connector pivotably mounted to the frame at the support arm to rotate about a pivot axis, a steerable wheel rotatably coupled to the caster connector, an assembly motor mechanically coupled to the caster connector to pivot the caster connector about the pivot axis, a primary drive gear disposed above a lower end of the support arm, the primary drive gear being in mechanical communication with the assembly motor to be rotated thereby, a primary driven gear in mechanical communication with the primary driven gear, and a secondary driven gear disposed on the caster connector in mechanical communication with the primary driven gear to direct rotation of the steerable wheel.

Embodiment 61. The tool device of any one or more of the embodiments, further comprising a reduction gear set in mechanical communication between the primary drive gear and the secondary driven gear.

Embodiment 62. The tool device of any one or more of the embodiments, further comprising a secondary drive gear mechanically coupled to the primary driven gear through the reduction gear set and mechanically coupled with the secondary driven gear.

Embodiment 62. The tool device of any one or more of the embodiments, wherein the reduction gear set mechanically couples the primary driven gear to the primary driven gear.

Embodiment 63. A tool device comprising: a frame comprising a support arm; a walking element coupled to the frame; a drive motor selectively powering the walking element; and a steerable-wheel assembly (SWA) attached to the frame apart from the walking element, the SWA comprising a caster connector pivotably mounted to the frame at the support arm to rotate about a pivot axis, a steerable wheel rotatably coupled to the caster connector, an assembly motor mechanically coupled to the caster connector to pivot the caster connector about the pivot axis, the assembly motor being radially offset from the caster connector relative to the pivot axis, a primary drive gear disposed at an upper end of the support arm opposite a lower end of the support arm, the primary drive gear being in mechanical communication with the assembly motor to be rotated thereby, a primary driven gear in mechanical communication with the primary driven gear, a secondary driven gear disposed on the caster connector in mechanical communication with the primary driven gear to direct rotation of the steerable wheel, and a detectable magnet fixed to the caster connector above the secondary driven gear to pivot with the caster connector about the pivot axis.

Embodiment 65. The tool device of any one or more of the embodiments, further comprising a secondary drive gear in mechanical communication with the primary driven gear apart from the primary drive gear.

Embodiment 66. The tool device of any one or more of the embodiments, wherein the secondary drive gear is mechanically coupled to the primary driven gear through the reduction gear set and mechanically coupled with the secondary driven gear.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A tool device comprising:
a frame comprising a support arm;
a walking element coupled to the frame;
a drive motor selectively powering the walking element; and
a steerable-wheel assembly (SWA) attached to the frame apart from the walking element, the SWA comprising
a caster connector pivotably mounted to the frame at the support arm to rotate about a pivot axis,
a steerable wheel rotatably coupled to the caster connector,
an assembly motor mechanically coupled to the caster connector to pivot the caster connector about the pivot axis,
a primary drive gear disposed above a lower end of the support arm, the primary drive gear being in mechanical communication with the assembly motor to be rotated thereby,
a primary driven gear in mechanical communication with the primary driven gear, and
a secondary driven gear disposed on the caster connector in mechanical communication with the primary driven gear to direct rotation of the steerable wheel.

2. The tool device of claim 1, further comprising a secondary drive gear mechanically coupled to the primary driven gear apart from the primary drive gear.

3. The tool device of claim 2, wherein the secondary drive gear is mounted coaxially with the primary driven gear.

4. The tool device of claim 1, further comprising a reduction gear set in mechanical communication between the primary drive gear and the secondary driven gear.

5. The tool device of claim 4, further comprising a secondary drive gear mechanically coupled to the primary driven gear through the reduction gear set and mechanically coupled with the secondary driven gear.

6. The tool device of claim 4, wherein the reduction gear set mechanically couples the primary driven gear to the primary driven gear.

7. The tool device of claim 2, wherein the SWA further comprises a detectable magnet fixed to the caster connector to pivot therewith about the pivot axis

8. The tool device of claim 7, wherein the SWA further comprises an encoder comprising a magnetic sensor fixed to the frame apart from the caster connector to detect a pivotable position of the detectable magnet

9. The tool device of claim 2, wherein the secondary drive gear defines a reference diameter (SERD), wherein the secondary driven gear defines a reference diameter (SNRD), and wherein the SERD is less than the SNRD.

10. The tool device of claim 2, wherein the primary drive gear defines a reference diameter (PERD), wherein the primary driven gear defines a reference diameter (PNRD), and wherein the PERD is less than the PNRD.

11. The tool device of claim 2, wherein the assembly motor is radially offset from the caster connector relative to the pivot axis.

12. A tool device comprising:
a frame comprising a support arm;
a walking element coupled to the frame;
a drive motor selectively powering the walking element; and
a steerable-wheel assembly (SWA) attached to the frame apart from the walking element, the SWA comprising
a caster connector pivotably mounted to the frame at the support arm to rotate about a pivot axis,
a steerable wheel rotatably coupled to the caster connector,
an assembly motor mechanically coupled to the caster connector to pivot the caster connector about the pivot axis, the assembly motor being radially offset from the caster connector relative to the pivot axis,
a primary drive gear disposed at an upper end of the support arm opposite a lower end of the support arm, the primary drive gear being in mechanical communication with the assembly motor to be rotated thereby,
a primary driven gear in mechanical communication with the primary driven gear,
a secondary driven gear disposed on the caster connector in mechanical communication with the primary driven gear to direct rotation of the steerable wheel,
a reduction gear set in mechanical communication between the primary drive gear and the secondary driven gear, and
a detectable magnet fixed to the caster connector above the secondary driven gear to pivot with the caster connector about the pivot axis.

13. The tool device of claim 12, further comprising a secondary drive gear in mechanical communication with the primary driven gear apart from the primary drive gear.

14. The tool device of claim 13, wherein the secondary drive gear is disposed at a lower end of the support arm.

15. The tool device of claim 13, wherein the secondary drive gear is mechanically coupled to the primary driven gear through the reduction gear set and mechanically coupled with the secondary driven gear.
